(19) Europäisches Patentamt / European Patent Office / Office européen des brevets

(11) **EP 4 086 875 B1**

(12) **EUROPEAN PATENT SPECIFICATION**

(45) Date of publication and mention
of the grant of the patent:
**23.07.2025 Bulletin 2025/30**

(21) Application number: **21744937.0**

(22) Date of filing: **14.01.2021**

(51) International Patent Classification (IPC):
*G08G 1/097* (2006.01)        *B60W 30/095* (2012.01)
*B60W 60/00* (2020.01)

(52) Cooperative Patent Classification (CPC):
**B60W 60/0015; B60W 30/0956; B60W 30/18159;
B60W 60/0027; B60W 60/00274; B60W 60/00276;**
B60W 2555/60; B60W 2556/40; B60W 2556/50;
B60W 2720/10

(86) International application number:
**PCT/CN2021/071694**

(87) International publication number:
**WO 2021/147748 (29.07.2021 Gazette 2021/30)**

(54) **SELF-DRIVING METHOD AND RELATED DEVICE**

SELBSTFAHRENDES VERFAHREN UND ZUGEHÖRIGE VORRICHTUNG

PROCÉDÉ DE CONDUITE AUTONOME ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2020 CN 202010075731**

(43) Date of publication of application:
**09.11.2022 Bulletin 2022/45**

(73) Proprietor: **Shenzhen Yinwang Intelligent
Technologies Co., Ltd.
Shenzhen, Guangdong 518129 (CN)**

(72) Inventors:
 • **MA, Chao**
   **Shenzhen, Guangdong 518129 (CN)**
 • **DU, Mingbo**
   **Shenzhen, Guangdong 518129 (CN)**
 • **ZHONG, Haiyan**
   **Shenzhen, Guangdong 518129 (CN)**

(74) Representative: **Maiwald GmbH
Elisenhof
Elisenstraße 3
80335 München (DE)**

(56) References cited:
EP-A1- 3 006 294        EP-A1- 3 285 230
CN-A- 105 488 243       CN-A- 109 582 022
CN-A- 109 583 151       CN-A- 109 693 668
CN-A- 109 697 875       CN-A- 110 738 871
US-A1- 2016 335 892     US-A1- 2019 243 371

## Description

### TECHNICAL FIELD

This application relates to the field of autonomous driving technologies, and in particular, to autonomous driving method and related device.

### BACKGROUND

Autonomous driving is a mainstream application in the field of artificial intelligence. The autonomous driving technology depends on collaboration of computer vision, a radar, a monitoring apparatus, a global positioning system, and the like, to implement autonomous driving of a motor vehicle without human intervention. At present, with people's increasing requirements for safe, comfortable, and efficient travel, the autonomous driving technology has increasingly become a technical field that the society focuses on. Currently, most autonomous driving technologies are relatively mature in a scenario of a highway with a clear right-of-way determination rule or a one-way road area with a fixed route. In this case, a road structure is clear, so that a vehicle can predict a future movement track of another vehicle based on a current speed of the another vehicle. In addition, a main perception scope of the vehicle is the front and rear, and requirements on a lateral perception scope and accuracy are not high. However, in some road intersection areas with narrow roads, complex road conditions, and unclear right of way, the autonomous driving technologies are not mature. Existing autonomous driving technologies usually cannot accurately predict an intersection with another vehicle, and cannot accurately track motion of vehicles in different directions. Consequently, it cannot be effectively ensured that an autonomous vehicle can safely and efficiently pass through an intersection. For example, a future movement track and a speed of another vehicle cannot be accurately predicted when the autonomous vehicle passes through an unprotected intersection (for example, the unprotected intersection may be an intersection without a traffic light).

Therefore, how to effectively ensure that an autonomous vehicle can safely and efficiently pass through an intersection is an urgent problem to be resolved.

EP 3006294 A1 describes a vehicle control apparatus that recognizes a moving body and a road shape around the vehicle, calculates a position, a moving direction and moving speed of the moving body, specifies an intersection position between an expected course of the vehicle and an expected course of the moving body, produces, selects and sets one of acceleration patterns in which the vehicle and the moving body do not pass the intersection position at the same time, and starts and accelerates the vehicle based on the selected and set acceleration pattern.

## SUMMARY

The invention is set out in the appended set of claims. Embodiments of this application provide an autonomous driving method and a related device, to ensure safe driving of a vehicle.

According to a first aspect, an embodiment of this application provides an autonomous driving method, and the method may include: determining, based on a first traveling track currently planned by a first vehicle, a traveling track set corresponding to the first traveling track, where the traveling track set includes one or more predicted second traveling tracks separately corresponding to N second vehicles, the N second vehicles are all vehicles in an area range corresponding to the first vehicle at a current intersection, a shortest distance between any second traveling track in the traveling track set and the first traveling track is within a first distance threshold, and N is a positive integer; determining an intersection track segment on each second traveling track in the traveling track set, where a shortest distance between any point on the intersection track segment and the first traveling track is within a second distance threshold, separately determining, based on current speeds and current locations that correspond to the N second vehicles, intersection times at which the N second vehicles arrive at the intersection track segment; and determining a speed of the first vehicle based on the intersection track segment on each second traveling track in the traveling track set and the corresponding intersection time.

To ensure driving safety of a vehicle during autonomous driving, an intersection track segment and an intersection time during driving of the vehicle need to be accurately determined, so as to control the vehicle to safely and efficiently pass through an intersection and move forward smoothly. It may be understood that, when driving at an intersection, a vehicle usually moves forward at the intersection according to a specific traveling rule, for example, a vehicle flow formed at the intersection. Therefore, in this embodiment of this application, according to the method provided in the first aspect, the traveling rule of the vehicle may be first determined as prior information in the autonomous driving technology, that is, the predicted second traveling track, and the intersection track segment between the second traveling track and the first traveling track currently planned by the first vehicle is determined based on the predicted second traveling track. For example, when passing through an intersection in a coverage area of a related service device, the first vehicle may receive location information that is of a plurality of second vehicles in an area corresponding to the intersection and that is sent by the related service device, to determine one or more pieces of predicted second traveling information (for example, going straight, going left, or going right) separately corresponding to the plurality of second vehicles. Then, a second traveling track that affects traveling of the first vehicle is selected from a plurality of predicted second traveling tracks respectively corresponding to the plurality of second vehicles in the area, and then an intersection track segment (that is, an intersection of the first vehicle and the second vehicle) and an intersection time of the second traveling track that affects traveling of the first vehicle and the first traveling track are determined. Further, proper and more refined traveling speed information of the vehicle is calculated based on the intersection track segment and the intersection time with reference to a condition around the vehicle (that is, a current speed and a current location of each second vehicle). This can prevent the first vehicle from sudden acceleration and sudden braking, so that a passenger has more comfortable and smoother ride experience. According to the method for determining an intersection track segment between vehicles based on prior information, there is no need to communicate with a plurality of vehicles at an intersection in real time, and there is no need to worry that a moving intent of a vehicle at a target intersection cannot be determined because a right of way is unclear (for example, there is no traffic light). Therefore, an intersection track segment determined by an autonomous vehicle can be more accurate, and it can be effectively ensured that the autonomous vehicle can safely and efficiently pass through the intersection.

The intersection time includes an intersection start time, and the separately determining, based on current speeds and current locations that correspond to the N second vehicles, intersection times at which the N second vehicles arrive at the intersection track segment includes: determining, based on the current speeds corresponding to the N second vehicles, intersection passing time in which each of the N second vehicles passes through the intersection track segment on the one or more corresponding predicted second traveling tracks; and determining, based on the current speeds corresponding to the N second vehicles, the current locations corresponding to the N second vehicles, and a location corresponding to the intersection track segment on each second traveling track in the traveling track set, an intersection start time at which each of the N second vehicles arrives at the intersection track segment on the one or more corresponding predicted second traveling tracks. During implementation of this embodiment of this application, after the intersection track segment between the first vehicle and each of the N second vehicles is determined, a time at which each of the N second vehicles arrives at the intersection track segment corresponding to the second vehicle and time in which each of the N second vehicles passes through the intersection track segment corresponding to the second vehicle further need to be determined, so that the first vehicle can calculate proper and more refined traveling speed information of the first vehicle based on an intersection start time and intersection passing time corresponding to each of the N second vehicles. This can prevent the first vehicle from sudden acceleration and sudden braking, so that a passenger has more comfortable and smoother ride experience.

The determining a speed of the first vehicle based on the intersection track segment on each second traveling track in the traveling track set and the corresponding intersection time includes: determining a location relationship between the intersection track segment and the first vehicle based on the intersection track segment on each second traveling track in the traveling track set and the corresponding intersection time; determining, according to a preset right-of-way rule, a right-of-way relationship between the first traveling track and the second traveling track corresponding to the intersection track segment, where the right-of-way relationship is priorities of a vehicle running on the first traveling track and a vehicle running on the second traveling track when passing through the intersection track segment; and determining, based on the right-of-way relationship and the location relationship, that a traveling speed with a minimum cost function value in a plurality of traveling speeds is the speed of the first vehicle. During implementation of this embodiment of this application, a location relationship between the intersection track segment on each second traveling track and the first vehicle is first determined based on the intersection track segment on each second traveling track in the traveling track set and the intersection time corresponding to the intersection track segment, and the traveling speed with the minimum cost function value in the plurality of traveling speeds of the first vehicle is determined as the speed of the first vehicle based on the location relationship. The cost function may be determined based on a preference of a passenger in the vehicle, a change rate of a speed and curvature of the vehicle, performance of the vehicle, and the like. This can prevent the first vehicle from sudden acceleration and sudden braking, so that the passenger has more comfortable and smoother ride experience. In addition, speed planning policies for different routes may be further determined according to the preset right-of-way rule, to effectively ensure that the first vehicle can safely and efficiently pass through the intersection.

In a possible implementation, the second traveling track is a track on a plurality of virtual lanes in the area range, the plurality of virtual lanes are used by the second vehicles to travel in the area range, and the plurality of virtual lanes are extended lanes that are respectively corresponding to a plurality of lanes obtained based on map information in the area range. During implementation of this embodiment of this application, when vehicles travel at an intersection, the vehicles usually move forward at the intersection in regular vehicle flows. In other words, the vehicle flow may be considered as that the vehicles travel in an extended lane of an original driving lane at a target intersection, and the extended lane may be considered as a virtual lane at the intersection. Therefore, any virtual lane line on the virtual lane may be set as a traveling track of the vehicle flow. Therefore, a virtual lane in which the second vehicle may travel at the intersection may be determined based on location information of the second vehicle at the target intersection (the second vehicle is any one of all vehicles in an area range corresponding to a current intersection), to predict one or more second traveling tracks corresponding to the second vehicle. Then, the one or more predicted second traveling tracks may be determined as the prior information in the autonomous driving technology, to determine the intersection track segment between the second traveling track and the first traveling track currently planned by the first vehicle. Therefore, according to the method for determining an intersection track segment between vehicles based on prior information determined based on a virtual lane and map information, there is no need to communicate with a plurality of vehicles at a target intersection in real time, and there is no need to worry that a right of way is unclear. Therefore, an intersection track segment determined by an autonomous vehicle can be more accurate, and it can be effectively ensured that the autonomous vehicle can safely and efficiently pass through the intersection. In a possible implementation, the determining, based on a first traveling track currently planned by a first vehicle, a traveling track set corresponding to the first traveling track includes: determining M traveling tracks, where the M traveling tracks include a predicted traveling track of each of the N second vehicles, and M is a positive integer less than or equal to N; and traversing the M traveling tracks, to determine the traveling track set from the M traveling tracks. During implementation of this embodiment of this application, all the second traveling tracks corresponding to the N second vehicles in the area range corresponding to the intersection may be traversed, and the second traveling track that affects traveling of the first vehicle is selected as a traveling track in the traveling track set. According to the method for finally selecting the second traveling track that affects traveling of the first vehicle by traversing all preset track information, the second traveling track that affects the first traveling track can be more accurately determined, so that the second vehicle that intersects with the first vehicle in the area range corresponding to the intersection can be effectively avoided, and it is ensured that the first vehicle can safely and efficiently pass through the intersection.

In a possible implementation, the determining an intersection track segment on each second traveling track in the traveling track set includes: separately determining first path points evenly distributed on the first traveling track at a preset interval and second path points evenly distributed on each second traveling track in the traveling track set at the preset interval; determining a plurality of interaction points from all the second path points, where a shortest distance between each of the plurality of interaction points and one of the first path points is within the second distance threshold; and determining that a track segment consisting of interaction points on each second traveling track in the traveling track set is the intersection track segment corresponding to each second traveling track in the traveling track set. During implementation of this embodiment of this application, when the intersection track segment is determined, shortest distances between path points on the first traveling track and the second traveling track may be matched to determine each interaction point whose shortest distance to one of the first path points on the second traveling track is within the second distance threshold, and a track segment formed by the plurality of interaction points is determined as the intersection track segment. In this way, a range of occupied track segment of the traveling track is determined in advance based on a predicted traveling track of a vehicle. This can avoid a safety hazard caused because a range of an intersection track segment cannot be determined in time because vehicles cannot be accurately monitored in real time, thereby ensuring safe driving of the first vehicle on a road, and avoiding a safety accident caused by collision. In a possible implementation, the determining a location relationship between the intersection track segment and the first vehicle based on the intersection track segment on each second traveling track in the traveling track set and the corresponding intersection time includes: constructing an ST graph of the first vehicle and the intersection track segment by using the first vehicle as an origin; and mapping, based on the intersection time, a location of the intersection track segment relative to the first vehicle to the ST graph, and determining the location relationship between the intersection track segment and the first vehicle. During implementation of this embodiment of this application, the intersection track segment corresponding to each second traveling track in the traveling track set is mapped to the ST graph in which the first vehicle is used as the origin. Based on a shadow area in the ST graph, a distance between the first vehicle and each position on the intersection track segment in a traveling distance of the first vehicle can be clearly determined, so that a plurality of traveling speeds corresponding to the first vehicle are accurately calculated, and a safer and more proper speed curve is planned based on the plurality of traveling speeds, to ensure orderly and efficient passing of vehicles at the intersection. It may be understood that the ST graph is a graph of a relationship between a distance and time, and represents a location relationship of a current location of a target object at a different time point relative to the origin.

In a possible implementation, the preset right-of-way rule includes: if a right-of-way priority of the second vehicle is higher than a right-of-way priority of the first vehicle, the first vehicle yields to the second vehicle. The right-of-way priority includes: a straight-through priority > a left-turn priority > a left-turn U-turn priority > a right-turn priority, and a main road priority > a branch priority. During implementation of this embodiment of this application, in the autonomous driving technology, when a vehicle passes through an intersection, intersection with vehicles in a plurality of directions needs to be considered, and a constraint of a traffic driving concept also needs to be considered. For example, when a road ahead is congested and traffic is directed by a law enforcement officer, driving needs to be preferably performed according to a gesture directed by the law enforcement officer. For example, according to a general road driving concept, a vehicle yields to a pedestrian, a branch yields to a main road, and the like. Therefore, in this embodiment of this application, the autonomous driving technology that complies with a right-of-way rule such as turning yields to straight-through or right-turn yields to left-turn is implemented, so that driving priorities of vehicles at an intersection can be specified, and orderly and efficient passing of the vehicles at the intersection can be ensured. In a possible implementation, the method further includes: determining occupancy grid map information, where the occupancy grid map information includes location information of a static object in the area range in an occupancy grid map corresponding to the target intersection; and planning the first traveling track based on the occupancy grid map information. During implementation of this embodiment of this application, it can be learned that when a static object (for example, a construction area, a vehicle accident area, or a turntable command console) that affects passing of a vehicle appears in an area range of an intersection, a traveling track of the first vehicle needs to be replanned based on a location of the static object, to avoid a safety accident caused by collision of an autonomous vehicle, ensure safe driving of the autonomous vehicle on a road, and further improve driving safety of the vehicle.

According to a second aspect, an embodiment of this application provides an autonomous driving apparatus, including: a first determining unit, configured to determine, based on a first traveling track currently planned by a first vehicle, a traveling track set corresponding to the first traveling track, where the traveling track set includes one or more predicted second traveling tracks separately corresponding to N second vehicles, the N second vehicles are all vehicles in an area range corresponding to the first vehicle at a current intersection, a shortest distance between any second traveling track in the traveling track set and the first traveling track is within a first distance threshold, and N is a positive integer; a second determining unit, configured to determine an intersection track segment on each second traveling track in the traveling track set, where a shortest distance between any point on the intersection track segment and the first traveling track is within a second distance threshold; an intersection unit, configured to separately determine, based on current speeds and current locations that correspond to the N second vehicles, intersection times at which the N second vehicles arrive at the intersection track segment; and a speed unit, configured to determine a speed of the first vehicle based on the intersection track segment on each second traveling track in the traveling track set and the corresponding intersection time.

The intersection time includes an intersection start time, and the intersection unit is specifically configured to: determine, based on the current speeds corresponding to the N second vehicles, intersection passing time in which each of the N second vehicles passes through the intersection track segment on the one or more corresponding predicted second traveling tracks; and determine, based on the current speeds corresponding to the N second vehicles, the current locations corresponding to the N second vehicles, and a location corresponding to the intersection track segment on each second traveling track in the traveling track set, an intersection start time at which each of the N second vehicles arrives at the intersection track segment on the one or more corresponding predicted second traveling tracks.

The speed unit is specifically configured to: determine a location relationship between the intersection track segment and the first vehicle based on the intersection track segment on each second traveling track in the traveling track set and the corresponding intersection time; determine, according to a preset right-of-way rule, a right-of-way relationship between the first traveling track and the second traveling track corresponding to the intersection track segment, where the right-of-way relationship is priorities of a vehicle running on the first traveling track and a vehicle running on the second traveling track when passing through the intersection track segment; and determine, based on the right-of-way relationship and the location relationship, that a traveling speed with a minimum cost function value in a plurality of traveling speeds is the speed of the first vehicle.

In a possible implementation, the second traveling track is a track on a plurality of virtual lanes in the area range, the plurality of virtual lanes are used by the second vehicles to travel in the target intersection, and the plurality of virtual lanes are extended lanes that are respectively corresponding to a plurality of lanes obtained based on map information in the area range.

In a possible implementation, the first determining unit is specifically configured to: determine M traveling tracks, where the M traveling tracks include a predicted traveling track of each of the N second vehicles, and M is a positive integer less than or equal to N; and traverse the M traveling tracks, to determine the traveling track set from the M traveling tracks.

In a possible implementation, the second determining unit is specifically configured to: separately determine first path points evenly distributed on the first traveling track at a preset interval and second path points evenly distributed on each second traveling track in the traveling track set at the preset interval; determine a plurality of interaction points from all the second path points, where a shortest distance between each of the plurality of interaction points and one of the first path points is within the second distance threshold; and determine that a track segment consisting of interaction points on each second traveling track in the traveling track set is the intersection track segment corresponding to each second traveling track in the traveling track set.

In a possible implementation, when the speed unit is configured to determine the location relationship between the intersection track segment and the first vehicle based on the intersection track segment on each second traveling track in the traveling track set and the corresponding intersection time, the speed unit is specifically configured to: construct an ST graph of the first vehicle and the intersection track segment by using the first vehicle as an origin; and map, based on the intersection time, a location of the intersection track segment relative to the first vehicle to the ST graph, and determine the location relationship between the intersection track segment and the first vehicle.

In a possible implementation, the preset right-of-way rule includes: if a right-of-way priority of the second vehicle is higher than a right-of-way priority of the first vehicle, the first vehicle yields to the second vehicle. The right-of-way priority includes: a straight-through priority > a left-turn priority > a left-turn U-turn priority > a right-turn priority, and a main road priority > a branch priority.

In a possible implementation, the apparatus further includes a third determining unit, configured to: determine occupancy grid map information, where the occupancy grid map information includes location information of a static object in the target intersection in an occupancy grid map corresponding to the target intersection; and plan the first traveling track based on the occupancy grid map information.

According to a third aspect, an embodiment of this application provides a computer storage medium, configured to store computer software instructions used by the autonomous driving apparatus provided in the second aspect. The computer storage medium includes a program designed for implementing the foregoing aspects.

According to a fourth aspect, an embodiment of this application provides a computer program. The computer program includes instructions, and when the computer program is executed by a computer, the computer is enabled to perform a procedure performed by the autonomous driving apparatus in the second aspect.

**BRIEF DESCRIPTION OF DRAWINGS**

To describe the technical solutions in embodiments of the present invention or in the background more clearly, the following describes the accompanying drawings used in embodiments of the present invention or in the background.

FIG. 1A is a schematic diagram of a speed planning method at a lane junction according to an embodiment of this application;
FIG. 1B is a schematic diagram of an optimal scheduling method at an autonomous intersection according to an embodiment of this application;
FIG. 2A is a schematic diagram of an architecture of an autonomous driving system according to an embodiment of this application;
FIG. 2B is a schematic diagram of an architecture of another autonomous driving system according to an embodiment of this application;
FIG. 2C is a function block diagram of an intelligent vehicle 002 according to an embodiment of this application;
FIG. 2D is a function block diagram of another intelligent vehicle 002 according to an embodiment of this application;
FIG. 2E is a schematic diagram of a structure of an autonomous driving apparatus in an intelligent vehicle according to an embodiment of this application;
FIG. 3A is a schematic flowchart of an autonomous driving method according to an embodiment of this application;
FIG. 3B is a schematic diagram of a plurality of service devices monitoring an area according to an embodiment of this application;
FIG. 3C is a schematic diagram of two cases in which a service device monitors a road section according to an embodiment of this application;
FIG. 3D is a schematic diagram of a traveling track of a vehicle at a left-turn unprotected intersection according to an embodiment of this application;
FIG. 3E is a schematic diagram of a plurality of predicted second traveling tracks respectively corresponding to a plurality of second vehicles according to an embodiment of this application;
FIG. 3F is a schematic diagram of selecting a traveling track set from a plurality of traveling tracks according to an embodiment of this application;
FIG. 3G is a schematic diagram of a virtual lane at an intersection according to an embodiment of this application;
FIG. 3H is a schematic diagram of a correspondence between a virtual lane and a preset traveling track according to an embodiment of this application;
FIG. 3I is a schematic diagram of determining an intersection track segment between a first vehicle and a second vehicle according to an embodiment of this application;
FIG. 3J is a schematic diagram of determining an intersection track segment based on path points according to an embodiment of this application;
FIG. 3K is a schematic diagram of determining a movement track segment on a second traveling track based on a vehicle point cloud according to an embodiment of this application;
FIG. 3L is a schematic diagram of an intersection when a first vehicle turns left according to an embodiment of this application;
FIG. 3M is an ST graph of an intersection track segment with the first vehicle shown in FIG. 3L according to an embodiment of this application;
FIG. 3N is another ST graph of an intersection track segment with the first vehicle shown in FIG. 3L according to an embodiment of this application;

FIG. 3O is still another ST graph of an intersection track segment with the first vehicle shown in FIG. 3L according to an embodiment of this application;
FIG. 4 is a schematic diagram of a structure of an autonomous driving apparatus according to an embodiment of this application; and
FIG. 5 is a schematic diagram of a structure of another autonomous driving apparatus according to an embodiment of this application.

## DESCRIPTION OF EMBODIMENTS

The following describes embodiments of the present invention with reference to the accompanying drawings in embodiments of the present invention.

In the specification, claims, and accompanying drawings of this application, the terms "first", "second", "third", "fourth", and the like are intended to distinguish between different objects but do not indicate a particular order. In addition, terms such as "include" and "have" and any other variants thereof are intended to cover a non-exclusive inclusion. For example, a process, method, system, product, or device that includes a series of steps or units is not limited to the listed steps or units, but optionally further includes steps or units that are not listed. Alternatively, other steps or units inherent to the process, method, product, or device are optionally further included.

"Embodiment" mentioned in this specification means that a particular feature, structure, or characteristic described with reference to the embodiment may be included in at least one embodiment of this application. The phrase appearing at various locations in this specification does not necessarily refer to a same embodiment, and is not an independent or alternative embodiment mutually exclusive to another embodiment. It is explicitly and implicitly understood by persons skilled in the art that embodiments described in the specification may be combined with another embodiment.

Terms such as "component", "module", and "system" used in this specification are used to indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed by various computer-readable media that store various data structures. The components may communicate by using a local and/or remote process and based on, for example, a signal having one or more data packets (for example, data from two components interacting with another component in a local system and/or a distributed system, and/or across a network such as an internet interacting with another system by using the signal).

First, some terms in this application are described, to help persons skilled in the art have a better understanding.

(1) A grid image, also referred to as a raster image, is an image that has been discretized in both space and brightness. A grid image may be considered as a matrix. Any element in the matrix corresponds to a point in the image, and a corresponding value corresponds to a gray level of the point. An element in the digital matrix is referred to as a pixel.

(2) Occupancy grid map (Occupancy Grid Map, OGM): A grid map divides an environment into a series of grids. Each grid is given a probable value, and the probable value indicates a probability that the grid is occupied. For example, in the occupancy grid map, for a point, a probability $p (s = 1)$ is used to represent a probability that the point is in a free (Free) state, and $p (s = 0)$ is used to represent a probability that the point is in an occupied (Occupied) state. Certainly, a sum of the two is 1.

(3) Robustness is a feature of a control system to maintain some other performance under specific (structure, size) parameter perturbations. According to different definitions of performance, robustness can be classified into stabilization robustness and performance robustness. A fixed controller designed for robustness of a closed-loop system is called robust controller. Robust (Robust) means strong. Robust is the key to survival of a system in abnormal and hazardous situations. For example, robustness of computer software means whether the software does not crash in a case of incorrect input, disk fault, network overload, or intentional attack.

(4) A road side unit (Road Side Unit, RSU) may include a high-gain directional beam-control read/write antenna and a radio frequency controller. The high-gain directional beam-control read/write antenna is a microwave transceiver module that transmits/receives, modulates/demodulates, encodes/decodes, and encrypts/decrypts data signals and data. The radio frequency controller is a module that controls data transmission and reception and receives information from an upper computer or sends information to an upper computer.

(5) A world coordinate system is an absolute coordinate system of a system. Before a user coordinate system is established, coordinates of all points on an image are determined based on an origin of the world coordinate system.

(6) An ST graph is a distance and time graph, and the ST graph represents a location relationship of a current location of an object at a different time point relative to an origin.

Then, the technical problem to be specifically resolved by this application is analyzed and proposed. In the conventional technology, an autonomous driving technology may include the following solution 1 and solution 2.

Solution 1: a speed planning method at a lane junction.

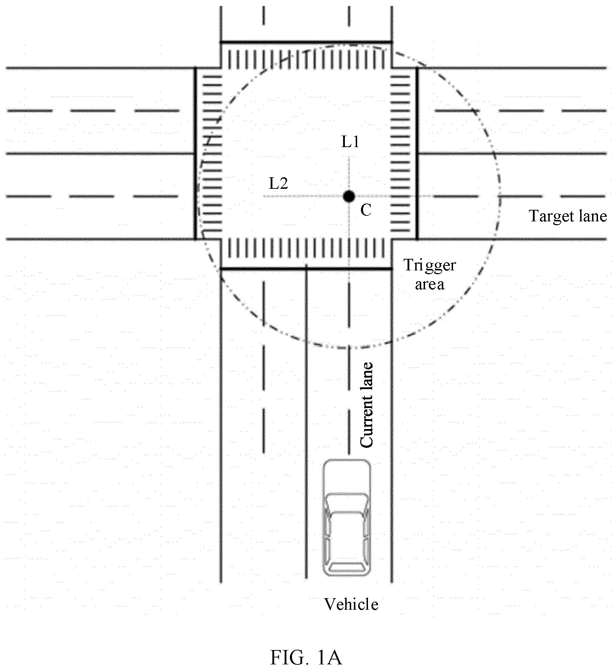

FIG. 1A is a schematic diagram of a speed planning method at a lane junction according to an embodiment of this application. The method may specifically include the following step 1 and step 2.

Step 1: Construct a trigger area based on the lane junction, predict a driving route of a moving vehicle in the trigger area, and generate a plurality of candidate speed tracks of an ego vehicle.

Step 2: Calculate a cost of each candidate speed track based on a predicted location of the moving vehicle at each time point, and search for a speed track with minimum costs as a speed planning result.

Solution 1 is usually used to plan a movement track solution of a first vehicle based on a movement track of another vehicle, and is currently mainly applicable to a highway scenario or a campus scenario with a fixed route. However, the solution 1 has the following disadvantages:

Disadvantage 1: An intersection selected in this solution is an intersection point of two lane extension lines, but not an intersection point of vehicle driving routes in two lane directions. Therefore, the intersection point can only be used to roughly determine an interaction range.

Disadvantage 2: In this solution, calculation of speed track costs greatly depends on an accurate predicted track of another vehicle. However, how to accurately predict a movement track of another vehicle is not mentioned in this solution.

Disadvantage 3: In this solution, determining of a right of way in terms of a driving concept is not considered, and driving efficiency of the ego vehicle cannot be ensured.

Solution 2: An optimal scheduling method at an autonomous intersection.

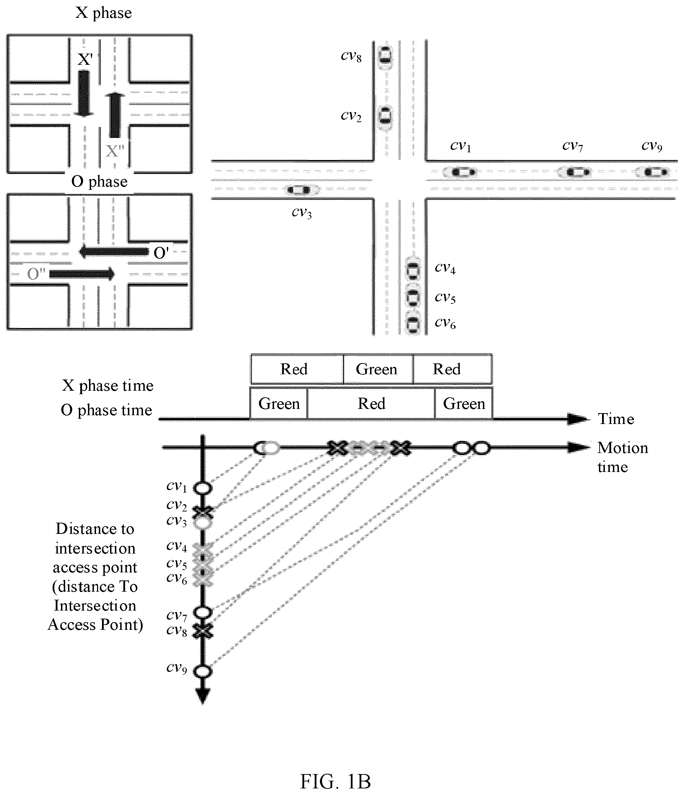

FIG. 1B is a schematic diagram of an optimal scheduling method at an autonomous intersection according to an embodiment of this application. The method may specifically include the following step 1.

Step 1: Obtain motion information of vehicles on each road, perform optimal speed planning by comprehensively considering a distance between each vehicle and an intersection and an arrival time of each vehicle, and allocate an optimal arrival time to each vehicle, so as to ensure safety, and significantly reduce a quantity of stops and intersection delays.

The solution 2 is currently mainly based on wireless communication between vehicles, to resolve an optimization problem and ensure that an autonomous vehicle safely and efficiently passes through an intersection. However, the solution 2 also has the following disadvantages:

Disadvantage 1: In this solution, accurate motion information of another vehicle can be obtained through vehicle-to-vehicle communication, to accurately track and predict vehicles moving in different directions. However, at present, an efficient vehicle-to-vehicle communication capability cannot be established, and accurate motion information of another vehicle cannot be directly obtained.

Disadvantage 2: In this solution, analysis of an intersection structure is not involved, and accurate intersections of vehicles in different directions cannot be obtained.

Disadvantage 3: In this solution, Impact of right of way ownerships in different directions during speed planning is not considered.

To resolve a problem that a current autonomous driving technology does not meet an actual driving requirement, and achieve an objective of efficiently and safely passing through an intersection and being applicable to autonomous driving traffic on any road, in consideration of disadvantages existing in the conventional technology, this application actually needs to resolve the following technical problems:

1. Accurately locate the intersection (disadvantage 1 of solution 1 and disadvantage 1 and disadvantage 2 of solution 2). Because there is no lane division in some unprotected intersections, when there are vehicles that turn left or right and go straight at the same time, if a movement track of another vehicle is predicted only based on a conventional uniform linear motion, it is difficult to predict an accurate intersection location, and even misjudgment of an autonomous vehicle may be caused, resulting in dangerous behavior. Therefore, an autonomous driving technology that can accurately locate an intersection is required, so that accurate information about an intersection point of different lanes can be obtained, to reduce impact on vehicle driving safety in an autonomous driving process when an intersection between vehicles cannot be accurately located.

2. Improve prediction robustness (disadvantage 2 of solution 1 and disadvantage 2 of solution 2). In the conventional technology, to implement autonomous driving at an intersection, a sensor needs to sense a wide range. In addition, because simultaneous interaction with vehicles in a plurality of directions may need to be performed at the intersection, moving vehicles in different directions need to be accurately detected, identified, and tracked. However, limited by a sensor configuration of the autonomous driving vehicle, accuracy of detecting and tracking an object in front of and behind the vehicle is usually high, and accuracy of detecting and tracking a lateral object is low. Even because sensor configurations and levels of different vehicles are different, raw data aggregated to a processor for processing may be different. Therefore, an autonomous driving technology that can locate a movement track of a vehicle without high-level communication between vehicles is required, to reduce dependence on object detection and tracking and improve prediction robustness.

3. Proper and efficient right-of-way traveling rules (disadvantage 3 of solution 1 and disadvantage 3 of solution 2). In an existing autonomous driving technology, a right of way is unclear in a driving process. Especially for an unprotected intersection without a traffic light, vehicles in different directions have an equal right of way for an overlapping area of roads in the intersection. Therefore, when a vehicle passes through the intersection, interaction with vehicles in a plurality of directions needs to be considered, and a constraint of a traffic driving concept also needs to be considered.

For example, when a road ahead is congested and traffic is directed by a law enforcement officer, driving needs to be preferably performed according to a gesture directed by the law enforcement officer. Therefore, an autonomous driving technology that complies with right-of-way management is required, to specify driving priorities of vehicles at an intersection, and ensure orderly and efficient passing of the vehicles at the intersection.

In conclusion, it can be learned that an autonomous driving vehicle can make more proper speed planning when passing through an intersection only when an interaction rule is considered for determining a right of way at the intersection, an intersection with another vehicle is accurately predicted, and motions of vehicles in different directions are accurately tracked. However, the foregoing three problems are usually not comprehensively considered and resolved in the conventional technology. Consequently, it cannot be effectively ensured that an autonomous driving vehicle can safely, efficiently, and comfortably pass through an intersection. Therefore, the autonomous driving method provided in this application is used to resolve the foregoing technical problems.

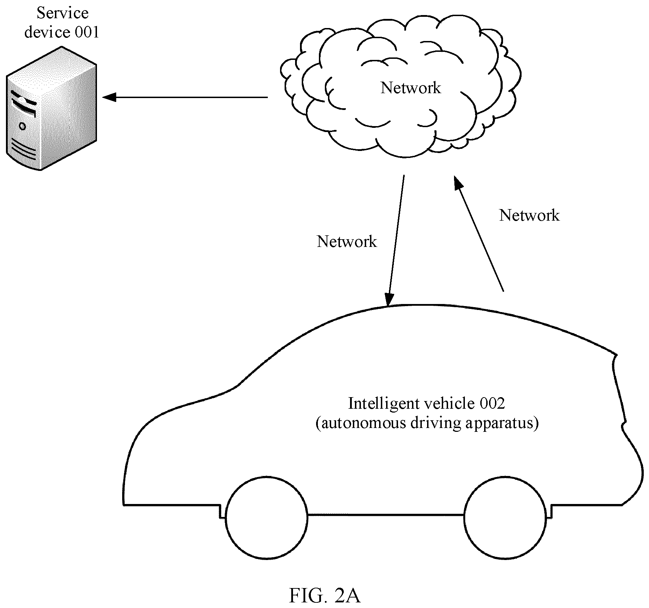

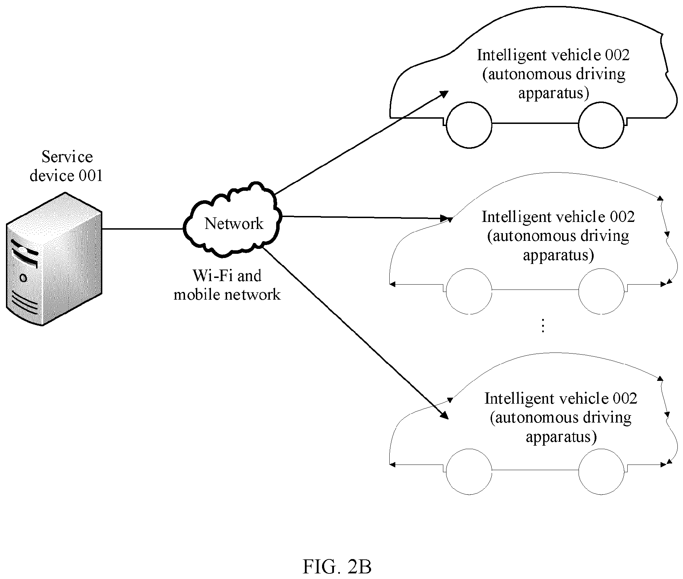

To facilitate understanding of embodiments of this application, the following first describes an architecture of an autonomous driving system on which embodiments of this application are based. FIG. 2A is a schematic diagram of an architecture of an autonomous driving system according to an embodiment of this application. The architecture of the autonomous driving system in this application may include a service device 001 and an intelligent vehicle 002 in FIG. 2A. The service device 001 and the intelligent vehicle 002 may communicate with each other through a network, so that the service device 001 monitors traveling of the intelligent vehicle 002 on a target road section. It may be understood that FIG. 2B is a schematic diagram of an architecture of another autonomous driving system according to an embodiment of this application. The service device 001 may simultaneously monitor a plurality of intelligent vehicles 002 in a coverage area.

The service device 001 may be a road side unit (Road Side Unit, RSU), a server, a camera, or the like. For example, the service device 001 may be a road side unit that is installed on a road side and that communicates with an on board unit (OBU, On Board Unit) by using a dedicated short range communication (Dedicated Short Range Communication, DSRC) technology, to implement vehicle identity recognition, speed detection, and the like. The service device 001 may alternatively be a service device that quickly obtains, processes, analyzes, and extracts data and that is based on data interaction, to bring various conveniences to a third party for use. In this application, the service device 001 may provide a first vehicle with a high definition map of a target intersection. The high definition map may include high definition coordinates, an accurate road shape, and data of a slope, a curvature, a course, an elevation, and a side tilt of each lane, and may further include vehicle data in each lane, and the like. For example, the high definition map provides descriptions about whether each lane line between lanes is a dashed line, a solid line, or a double-yellow line, a line color, a road isolation belt, a material of the isolation belt, and even content and a location of an arrow or text on the road. The service device 001 may provide the first vehicle with high definition maps of a plurality of intersections in a coverage area in which the first vehicle is located.

The intelligent vehicle 002 is a vehicle that senses a road environment by using an in-vehicle sensing system, automatically plans a driving route, and controls the vehicle to reach a preset destination. An intelligent vehicle is a high-tech complex that integrates functions such as environment perception, planning decision-making, and multilevel assisted driving and uses technologies such as computer, modern sensing, information fusion, communication, artificial intelligence, and automatic control. The intelligent vehicle in this application may be a vehicle mainly implemented autonomous driving by using a computer system-based intelligent pilot in the vehicle, or may be an intelligent vehicle having an assisted driving system or a fully automated driving system, or may be a wheeled mobile robot, or the like. When the intelligent vehicle 002 is an intelligent vehicle having an autonomous driving system and driving on a road section in the coverage area of the service device 001, an autonomous driving control apparatus in the intelligent vehicle may receive a high definition map of a driving area sent by the service device 001, and then predict traveling tracks of all vehicles in the coverage area based on map information. The autonomous driving control apparatus may determine, based on a first traveling track currently planned by the first vehicle, a traveling track set corresponding to the first traveling track, where the traveling track set includes one or more predicted second traveling tracks separately corresponding to N second vehicles, the N second vehicles are all vehicles in an area range corresponding to the first vehicle at a current intersection, a shortest distance between any second traveling track in the traveling track set and the first traveling track is within a first distance threshold, and N is a positive integer; determine an intersection track segment on each second traveling track in the traveling track set, where a shortest distance between any point on the intersection track segment and the first traveling track is within a second distance threshold, separately determine, based on current speeds and current locations that correspond to the N second vehicles, intersection times at which the N second vehicles arrive at the intersection track segment; and determine a speed of the first vehicle based on the intersection track segment on each second traveling track in the traveling track set and the corresponding intersection time.

It may be understood that the architectures of the vehicle traveling control system in FIG. 2A and FIG. 2B are merely examples of implementations in embodiments of this application. The architecture of the vehicle traveling control system in embodiments of this application includes but is not limited to the foregoing architectures of the vehicle traveling control system.

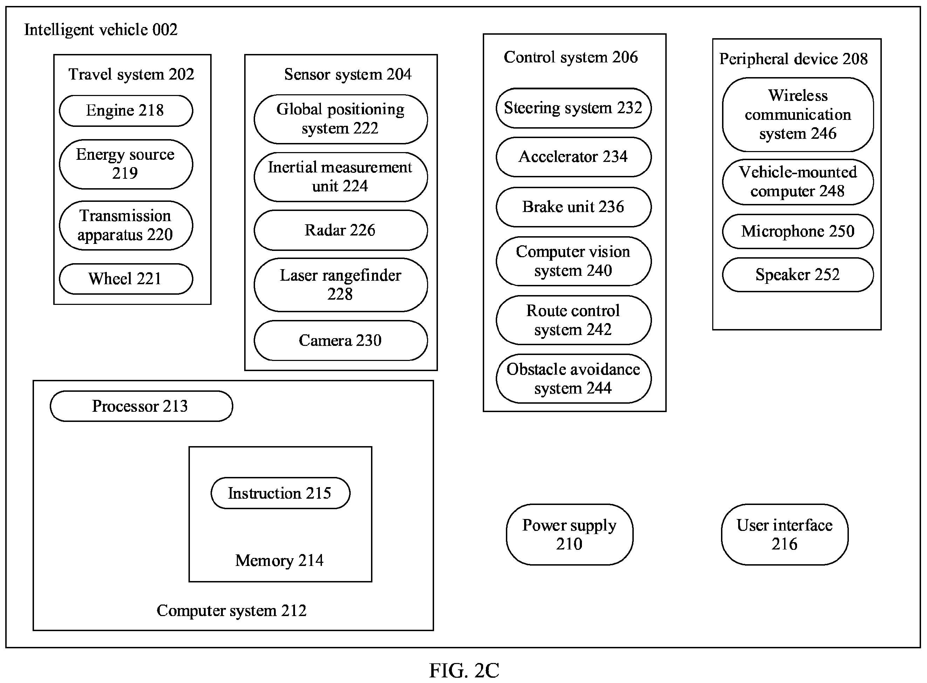

Based on the foregoing architectures of the vehicle traveling control system, an embodiment of this application provides the intelligent vehicle 002 applied to the foregoing architectures of the autonomous driving system. FIG. 2C is a function block diagram of the intelligent vehicle 002 according to this embodiment of this application. In an embodiment, the intelligent vehicle 002 may be configured to be in a fully or partially autonomous driving mode. For example, the intelligent vehicle 002 in the autonomous driving mode may control the intelligent vehicle 002. A manual operation may be performed to determine current statuses of the vehicle and an ambient environment of the vehicle, determine possible behavior of at least one another vehicle in the ambient environment, determine a confidence level corresponding to a possibility that the another vehicle performs the possible behavior, and control the intelligent vehicle 002 based on determined information. When the intelligent vehicle 002 is in the autonomous driving mode, the intelligent vehicle 002 may be set to operate without interacting with a person.

The intelligent vehicle 002 may include various subsystems, such as a travel system 202, a sensor system 204, a control system 206, one or more peripheral devices 208, a power supply 210, a computer system 212, and a user interface 216. Optionally, the intelligent vehicle 002 may include more or fewer subsystems, and each subsystem may include a plurality of components. In addition, each subsystem and element of the intelligent vehicle 002 may be interconnected in a wired or wireless manner.

The travel system 202 may include a component that provides power for the intelligent vehicle 002 to move. In an embodiment, the travel system 202 may include an engine 218, an energy source 219, a transmission apparatus 220, and a wheel/tire 221. The engine 218 may be an internal combustion engine, a motor, an air compression engine, or another type of engine combination, for example, a hybrid engine including a gasoline engine and a motor, or a hybrid engine including an internal combustion engine and an air compression engine. The engine 218 converts the energy source 219 into mechanical energy.

The energy source 219 includes, for example, gasoline, diesel, other oil-based fuels, propane, other compressed gas-based fuels, ethanol, solar panels, batteries, and other power sources. The energy source 219 may also provide energy for another system of the intelligent vehicle 002.

The transmission apparatus 220 may transfer mechanical power from the engine 218 to the wheel 221. The transmission apparatus 220 may include a gearbox, a differential, and a drive shaft. In an embodiment, the transmission apparatus 220 may further include another component, for example, a clutch. The drive shaft may include one or more shafts that may be coupled to one or more wheels 221.

The sensor system 204 may include several sensors for sensing information about an ambient environment of the intelligent vehicle 002. For example, the sensor system 204 may include a positioning system 222 (the positioning system may be a GPS system, a BeiDou system, or another positioning system), an inertial measurement unit (inertial measurement unit, IMU) 224, a radar 226, a laser rangefinder 228, and a camera 230. The sensor system 204 may further include sensors (for example, an in-vehicle air quality monitor, a fuel gauge, and an oil temperature gauge) in an internal system of the monitored intelligent vehicle 002. Sensor data from one or more of these sensors can be used to detect an object and corresponding features (a location, a shape, a direction, a speed, and the like) of the object. Such detection and identification are key functions of security operations of an autonomous intelligent vehicle 002.

The positioning system 222 may be configured to estimate a geographical location of the intelligent vehicle 002. The IMU 224 is configured to sense location and orientation changes of the intelligent vehicle 002 based on inertial acceleration. In an embodiment, the IMU 224 may be a combination of an accelerometer and a gyroscope. For example, the IMU 224 may be configured to measure an acceleration of the intelligent vehicle 002.

The radar 226 may sense an object within the ambient environment of the intelligent vehicle 002 by using a radio signal. In some embodiments, in addition to sensing the object, the radar 226 may be further configured to sense a speed and/or a moving direction of the object.

The laser rangefinder 228 may sense, by using a laser, an object in an environment in which the intelligent vehicle 002 is located. In some embodiments, the laser rangefinder 228 may include one or more laser sources, a laser scanner, one or more detectors, and another system component.

The camera 230 may be configured to capture a plurality of images of the ambient environment of the intelligent vehicle 002. The camera 230 may be a static camera or a video camera.

The control system 206 controls operations of the intelligent vehicle 002 and the components of the intelligent vehicle 002. The control system 206 may include various elements, including a steering system 232, an accelerator 234, a brake unit 236, a sensor fusion algorithm 238, a computer vision system 240, a route control system 242, and an obstacle avoidance system 244.

The steering system 232 may operate to adjust a heading direction of the intelligent vehicle 002. For example, in an embodiment, the steering system 232 may be a steering wheel system.

The accelerator 234 is configured to control an operating speed of the engine 218, so as to control a speed of the intelligent vehicle 002.

The brake unit 236 is configured to control the intelligent vehicle 002 to decelerate. The brake unit 236 may slow the wheel 221 by using friction. In other embodiments, the brake unit 236 may convert kinetic energy of the wheel 221 into a current. The brake unit 236 may alternatively slow a rotational speed of the wheel 221 in another form, so as to control the speed of the intelligent vehicle 002.

The computer vision system 240 may be operated to process and analyze an image captured by the camera 230, to recognize objects and/or features in the ambient environment of the intelligent vehicle 002. The objects and/or features may include traffic signals, road boundaries, and obstacles. The computer vision system 240 may use an object recognition algorithm, a structure from motion (Structure from Motion, SFM) algorithm, video tracking, and another computer vision technology. In some embodiments, the computer vision system 240 may be configured to: draw a map for an environment, track an object, estimate a speed of the object, and the like.

The route control system 242 is configured to determine a driving route of the intelligent vehicle 002. In some embodiments, the route control system 242 may determine a driving route for the intelligent vehicle 002 with reference to data from the sensors 238, the GPS 222, and one or more predetermined maps.

The obstacle avoidance system 244 is configured to recognize, evaluate, and avoid or otherwise bypass a potential obstacle in the environment of the intelligent vehicle 002.

Certainly, in an example, the control system 206 may add or alternatively include components in addition to those shown and described, or some of the shown components may be removed from the control system 106.

The intelligent vehicle 002 interacts with an external sensor, another vehicle, another computer system, or a user through the peripheral device 208. The peripheral device 208 may include a wireless communication system 246, a vehicle-mounted computer 248, a microphone 250, and/or a speaker 252.

In some embodiments, the peripheral device 208 provides a means for the user of the intelligent vehicle 002 to interact with the user interface 216. For example, the vehicle-mounted computer 248 may provide information to the user of the intelligent vehicle 002. The user interface 216 may further receive a user input through the vehicle-mounted computer 248. The vehicle-mounted computer 248 may be operated by using a touchscreen. In another case, the peripheral device 208 may provide a means for the intelligent vehicle 002 to communicate with another device located in the intelligent vehicle 002. For example, the microphone 250 may receive audio (for example, a voice command or another audio input) from the user of the intelligent vehicle 002. Similarly, the speaker 252 may output audio to the user of the intelligent vehicle 002.

The wireless communication system 246 may communicate with one or more devices directly or through a communication network. For example, the wireless communication system 246 may perform communication through a 3G cellular network such as CDMA, EVD0, or GSM/GPRS, perform communication through a 4G cellular network such as LTE, or perform communication through a 5G cellular network. The wireless communication system 246 may communicate with a wireless local area network (wireless local area network, WLAN) by using Wi-Fi. In some embodiments, the wireless communication system 246 may directly communicate with a device by using an infrared link, Bluetooth, or ZigBee. Other wireless protocols, for example, various vehicle communication systems, such as the wireless communication system 246, may include one or more dedicated short range communications (dedicated short range communications, DSRC) devices, and these devices may include public and/or private data communication between the vehicle and/or roadside stations. For another example, real-time data within an intersection area range provided by a roadside-related service device may be received.

The power supply 210 may supply power to various components of the intelligent vehicle 002. In an embodiment, the power supply 210 may be a rechargeable lithium-ion or lead-acid battery. One or more battery packs of such a battery may be configured as a power supply to supply power to the various components of the intelligent vehicle 002. In some embodiments, the power supply 210 and the energy source 219 may be implemented together, for example, related devices in some pure electric vehicles.

Some or all functions of the intelligent vehicle 002 are controlled by the computer system 212. The computer system 212 may include at least one processor 213. The processor 213 executes instructions 215 stored in a non-transient computer-readable medium such as a memory 214. The computer system 212 may alternatively be a plurality of computing devices that control individual components or subsystems of the intelligent vehicle 002 in a distributed manner.

The processor 213 may be any conventional processor, for example, a commercially available CPU. Alternatively, the processor may be a dedicated device such as an ASIC or another hardware-based processor. Although FIG. 2C functionally illustrates other elements of a processor, a memory, and a computer 120 in the same block, persons of ordinary skill in the art should understand that the processor, the computer, or the memory may actually include a plurality of processors, computers, or memories that may or may not be stored in the same physical housing. For example, the memory may be a hard disk drive, or another storage medium located in a housing different from that of the computer 120. Therefore, a reference to the processor or the computer will be understood as including a reference to a set of processors, computers, or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and perform wireless communication with the vehicle. In another aspect, some of processes described herein are performed on a processor disposed inside the vehicle, while others are performed by a remote processor. The processes include necessary steps for performing a single operation.

In some embodiments, the memory 214 may include the instructions 215 (for example, program logic), and the instructions 215 may be executed by the processor 213 to perform various functions of the intelligent vehicle 002, including the functions described above. The memory 214 may further include additional instructions, including instructions for sending data to, receiving data from, interacting with, and/or controlling one or more of the travel system 202, the sensor system 204, the control system 206, and the peripheral device 208.

In addition to the instructions 215, the memory 214 may further store data, such as a road map, route information, and a location, a direction, a speed, and other such vehicle data of the vehicle, and other information. Such information may be used by the intelligent vehicle 002 and the computer system 212 during operation of the intelligent vehicle 002 in an autonomous, semi-autonomous, and/or manual mode. For example, a traveling track set corresponding to a first traveling track may be determined based on the first traveling track currently planned by a first vehicle; an intersection track segment on each second traveling track in the traveling track set may be determined, intersection times at which the N second vehicles arrive at the intersection track segment may be separately determined based on current speeds and current locations that correspond to N second vehicles; and a speed of the first vehicle may be determined based on the intersection track segment on each second traveling track in the traveling track set and the corresponding intersection time.

The user interface 216 is configured to provide information to or receive information from the user of the intelligent vehicle 002. Optionally, the user interface 216 may include one or more input/output devices within a set of peripheral devices 208, such as the wireless communication system 246, the vehicle-mounted computer 248, the microphone 250, and the speaker 252.

The computer system 212 may control a function of the intelligent vehicle 002 based on inputs received from various subsystems (for example, the travel system 202, the sensor system 204, and the control system 206) and the user interface 216. For example, the computer system 212 may control the steering unit 232 by using an input from the control system 206, to avoid an obstacle detected by the sensor system 204 and the obstacle avoidance system 244. In some embodiments, the computer system 212 may be operated to provide control over many aspects of the intelligent vehicle 002 and subsystems of the intelligent vehicle 002.

Optionally, one or more of the foregoing components may be installed separately from or associated with the intelligent vehicle 002. For example, the memory 214 may exist partially or entirely separated from the intelligent vehicle 002. The foregoing components may be communicatively coupled together in a wired and/or wireless manner. Optionally, the foregoing components are merely examples. In actual application, components in the foregoing modules may be added or deleted depending on actual requirements. FIG. 2C should not be understood as any limitation on embodiments of this application.

An autonomous vehicle traveling on a road, for example, the intelligent vehicle 002, may recognize an object in an ambient environment of the autonomous vehicle, to determine to adjust a current speed. The objects may be another vehicle, a traffic control device, or another type of object. In some examples, each recognized object may be considered independently, and based on features of each object, such as a current speed of the object, an acceleration of the object, and a spacing between the object and the vehicle, may be used to determine the speed to be adjusted by the autonomous vehicle.

Optionally, the autonomous intelligent vehicle 002 or a computing device associated with the autonomous intelligent vehicle 002 (for example, the computer system 212, the computer vision system 240, or the memory 214 in FIG. 2C) may predict behavior of the identified object based on a feature of the identified object and a state of the ambient environment (for example, traffic, rain, and ice on a road). Optionally, recognized objects depend on behavior of each other, and therefore, all the recognized objects may be considered together to predict behavior of a single recognized object. The intelligent vehicle 002 can adjust the speed of the intelligent vehicle 002 based on the predicted behavior of the identified object. In other words, the autonomous vehicle can determine, based on the predicted behavior of the object, a stable state to which the vehicle needs to be adjusted (for example, acceleration, deceleration, or stop). In this process, another factor, for example, a transverse location of the intelligent vehicle 002 on a road on which the intelligent vehicle 002 travels, a curvature of the road, or proximity between static and dynamic objects may also be considered, to determine the speed of the intelligent vehicle 002.

In addition to providing instructions for adjusting the speed of the autonomous vehicle, the computing device may further provide instructions for modifying a steering angle of the intelligent vehicle 002, so that the autonomous vehicle follows a given trajectory and/or maintains safe horizontal and vertical distances between the autonomous vehicle and an object (for example, a car in an adjacent lane on the road) near the autonomous vehicle.

The intelligent vehicle 002 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

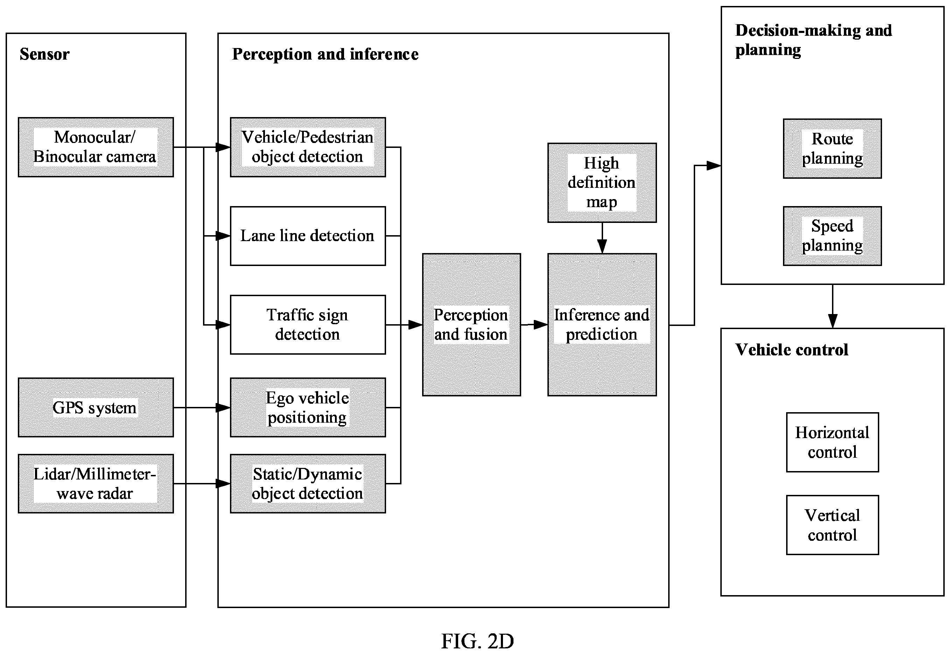

FIG. 2D is a function block diagram of another intelligent vehicle 002 according to an embodiment of this application. The function block diagram of the intelligent vehicle 002 shown in FIG. 2D is usually divided into four parts: a sensor layer, a perception and inference layer, a decision-making and planning layer, and a vehicle control layer. A processing data stream is sequentially processed by the four main processing layers, to control the first vehicle to efficiently and safely pass through the target intersection.

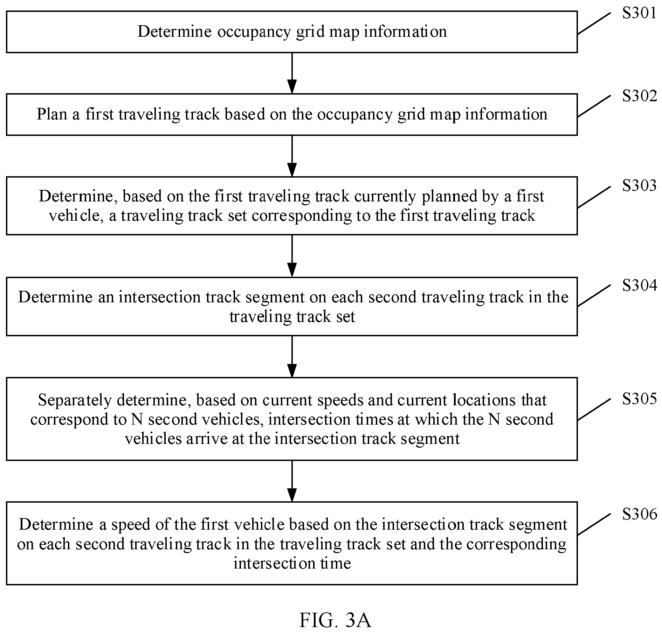

It should be noted that the sensor layer is equivalent to the sensor system 204 in FIG. 2C, and is mainly configured to load related data collected by related devices such as a monocular/binocular camera, a lidar/millimeter-wave radar, and a GPS positioning device, to obtain an ambient environment of the target intersection and vehicle and pedestrian information at the intersection. The monocular/binocular camera at the sensor layer is equivalent to the camera 230 in FIG. 2C, the lidar/millimeter-wave radar at the sensor layer is equivalent to the radar 226 in FIG. 2C, and the GPS positioning device at the sensor layer is equivalent to the global positioning system 222 in FIG. 2C. For example, a front-view camera is responsible for collecting road images, a radar is responsible for collecting moving and static target data, and an image processor is responsible for lane line identification, road edge identification, and vehicle/non-motor vehicle/pedestrian identification. A CPU is responsible for system control, obtains image data and target status data from the camera and radar, invokes the image processor and an internal computing module of the CPU to perform target identification, fusion, prediction, and operation output of decision-making control instruction signals, and sends the processed signals to a controller to control moving of the vehicle. Therefore, for related descriptions of functions of the sensor layer, refer to related descriptions in the embodiment shown in FIG. 2C and related descriptions in the following embodiment shown in FIG. 3A. Details are not described herein again.

The perception and inference layer and the decision-making and planning layer are equivalent to the computer system 212 in FIG. 2C. The perception and inference layer is configured to load a vehicle/pedestrian target detection module, an ego vehicle positioning module, a dynamic/static target detection module, a perception and fusion module, a high definition map module, and an inference and prediction module. The decision-making and planning layer is configured to load a path planning module and a speed planning module. The perception and inference layer is used by the intelligent vehicle 002 to infer and predict, based on information (for example, image information of a vehicle/pedestrian, location information of ego vehicle positioning, and lane information of intersection lanes) obtained by the sensor layer, a traveling track of a vehicle that affects the first vehicle, so as to infer traveling time and a traveling location that are of the vehicle and at which the vehicle affects the first vehicle. The decision-making and planning layer is used to determine a final driving route and a traveling speed of the first vehicle based on the traveling time and the traveling location inferred by the perception and inference layer. For example, the perception and fusion module is mainly responsible for detecting a pedestrian around a vehicle and outputting location and motion information of the pedestrian; the inference and prediction module is mainly responsible for predicting a behavior intent and a future movement track of each target object around the ego vehicle based on motion information of the target object output by the perception and fusion module; and a decision-making and planning module is mainly responsible for determining and planning a current traveling speed of the vehicle based on the behavior intent and a track prediction result of the target object and with reference to a space occupation relationship between a driving route of the ego vehicle and the behavior intent and the track prediction result of the target object. Therefore, for related descriptions of functions of the perception and inference layer and the decision-making and planning layer, refer to related descriptions in the embodiment shown in FIG. 2C and related descriptions in the following embodiment shown in FIG. 3A. Details are not described herein again.

The vehicle control layer is equivalent to the control system 206 in FIG. 2C. The vehicle control layer is used for horizontal control and vertical control of the vehicle, to ensure that the vehicle can effectively execute the path and the vehicle speed that are determined by the perception and inference layer and the decision-making and planning layer, so that the first vehicle efficiently and safely passes through the target intersection. Therefore, for related descriptions of functions of the vehicle control layer, refer to related descriptions in the embodiment shown in FIG. 2C and related descriptions in the following embodiment shown in FIG. 3A. Details are not described herein again. It may be understood that the intelligent vehicle function diagrams in FIG. 2C and FIG. 2D are merely two example implementations in embodiments of this application. The intelligent vehicle in embodiments of this application includes but is not limited to the foregoing structures.

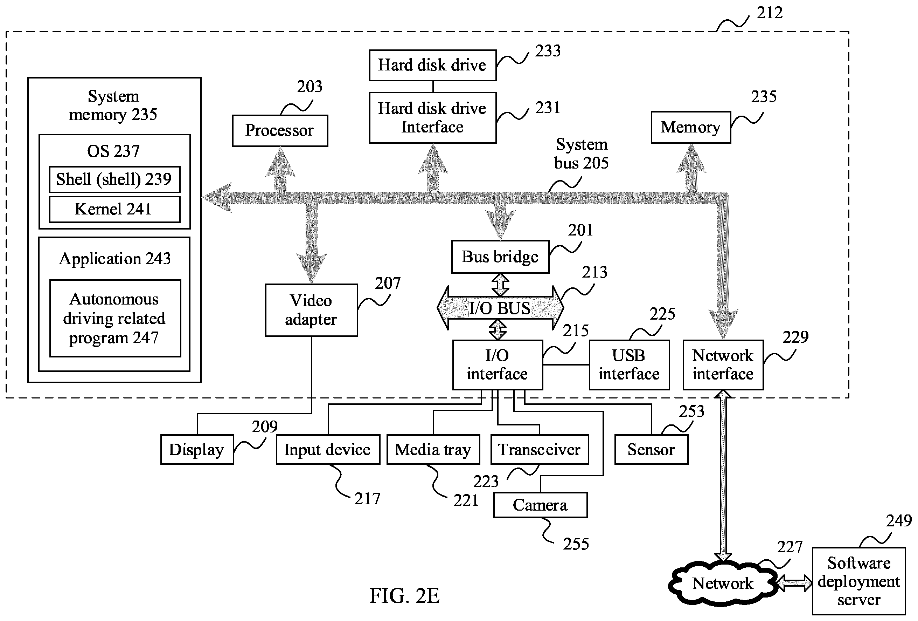

FIG. 2E is a schematic diagram of a structure of an autonomous driving apparatus in an intelligent vehicle according to an embodiment of this application. The autonomous driving apparatus is applied to FIG. 2C and FIG. 2D, and is equivalent to the computer system 212 in FIG. 2C, or may be equivalent to the perception and inference layer and the decision-making and planning layer in FIG. 2D. The autonomous driving apparatus may include a processor 203, and the processor 203 is coupled to a system bus 205. The processor 203 may be one or more processors, and each processor may include one or more processor cores. A memory 235 may store related data information, and the memory 235 is coupled to the system bus 205. A video adapter (video adapter) 207 may drive a display 209, and the display 209 is coupled to the system bus 205. The system bus 205 is coupled to an input/output (I/O) bus 213 through a bus bridge 201. An I/O interface 215 is coupled to the I/O bus. The I/O interface 215 communicates with a plurality of I/O devices, for example, an input device 217 (such as a keyboard, a mouse, and a touchscreen) and a media tray (media tray) 221 (such as a CD-ROM and a multimedia interface). A transceiver 223 (which may send and/or receive a radio communication signal), a camera 255 (which may capture static and dynamic digital video images), and an external USB interface 225 are provided. Optionally, an interface connected to the I/O interface 215 may be a USB interface.

The processor 203 may be any conventional processor, including a reduced instruction set computing ("RISC") processor, a complex instruction set computing ("CISC") processor, or a combination thereof. Optionally, the processor may be a dedicated apparatus such as an application-specific integrated circuit ("ASIC"). Optionally, the processor 203 may be a neural network processor or a combination of a neural network processor and the foregoing conventional processor. For example, the processor 203 may calculate proper and refined speed data of the intelligent vehicle 002 (for example, a speed of a first vehicle) based on first traveling information and with reference to a condition around the vehicle.

Optionally, in various embodiments described in the specification, the computer system 212 may be located away from the autonomous vehicle and may communicate wirelessly with the autonomous vehicle. In other aspects, some of the processes described in this specification are performed on a processor disposed inside the autonomous vehicle, and others are performed by a remote processor, including taking actions required to perform a single operation.

The computer system 212 may communicate with a software deployment server 249 through a network interface 229.

The network interface 229 is a hardware network interface, for example, a network interface card. A network 227 may be an external network, such as the Internet; or may be an internal network, such as the Ethernet or a virtual private network (VPN). Optionally, the network 227 may alternatively be a wireless network, for example, a Wi-Fi network or a cellular network.

The transceiver 223 (which may send and/or receive a radio communication signal) may use various wireless communication manners, such as but not limited to second-generation mobile networks (2th generation mobile networks, 2G), 3G, 4G, and 5G, or may use a DSRC technology, a long term evolution-vehicle (Long Term Evolution-Vehicle, LTE-V) technology, or the like. A main function of the transceiver 223 is to receive information data sent by an external device, and send information data generated when the vehicle travels on a target road section back to the external device for storage and analysis.

A hard disk drive interface 231 is coupled to the system bus 205. The hard disk drive interface 231 is connected to a hard disk drive 233. A system memory 235 is coupled to the system bus 205. Data running in the system memory 235 may include an operating system 237 and an application 243 of the computer system 212.

The memory 235 is coupled to the system bus 205. For example, in this application, the memory 235 may be configured to store, in the memory in a specific format, map information or intersection information corresponding to a target intersection.

The operating system includes a shell (Shell) 239 and a kernel (kernel) 241. The shell 239 is an interface between a user and the kernel (kernel) of the operating system. The shell is an outermost layer of the operating system. The shell manages interaction between the user and the operating system: waiting for an input from the user, interpreting the input from the user to the operating system, and processing various output results of the operating system.

The kernel 241 includes components of the operating system that are configured to manage a memory, a file, a peripheral, and system resources. The kernel directly interacts with hardware. The kernel of the operating system usually runs processes, provides communication between the processes, and provides CPU time slice management, interruption, memory management, I/O management, and the like.

The application 243 includes programs for controlling autonomous driving of the vehicle, for example, a program that manages interaction between the autonomous vehicle and a road obstacle, a program that controls a route or a speed of the autonomous vehicle, a program that controls interaction between the autonomous vehicle and another autonomous vehicle on a road. The application 243 also exists in a system of the deploying server 249. In an embodiment, when an application 247 needs to be executed, the computer system 212 may download the application 243 from the deploying server 249. For example, the application 243 may convert, based on speed information calculated by the processor and by using a dynamic model of vehicle engineering, such as a bicycle model or an Ackermann model, the speed information into a line control command for controlling the vehicle, that is, convert the speed information into an accelerator pedal opening and angular velocity information of a steering wheel to control traveling of the vehicle on the target road section.

A sensor 253 is associated with the computer system 212, and is equivalent to the sensor system in FIG. 2C and the sensor layer in FIG. 2D. The sensor 253 is configured to detect an ambient environment of the computer system 212, or is configured to receive and process information sent by the sensor system in FIG. 2C and the sensor layer in FIG. 2D. For example, the sensor 253 can detect an animal, a car, an obstacle, a pedestrian crosswalk, and the like. Further, the sensor can detect an ambient environment of the animal, the car, the obstacle, or the pedestrian crosswalk. For example, the sensor can detect an ambient environment of the animal, such as other animals around the animal, a weather condition, and brightness of the ambient environment. Optionally, if the computer system 212 is located on the autonomous vehicle, the sensor may be a camera, an infrared sensor, a chemical detector, a microphone, or the like.

It may be understood that the structure of the autonomous driving apparatus in FIG. 2E is merely an example of an implementation in this embodiment of this application. The structure of the autonomous driving apparatus applied to the intelligent vehicle in this embodiment of this application includes but is not limited to the foregoing structure.

Based on the architectures of the autonomous driving system provided in FIG. 2A and FIG. 2B and the structures of the intelligent vehicle provided in FIG. 2C, FIG. 2D, and FIG. 2E, and with reference to the autonomous driving method provided in this application, the technical problems proposed in this application are specifically analyzed and resolved.

FIG. 3A is a schematic flowchart of an autonomous driving method according to an embodiment of this application.

The method may be applied to the system architecture in FIG. 1A or FIG. 1B. The autonomous driving apparatus may be configured to support performing step S301 to step S306 in the method procedure shown in FIG. 3A.

Step S301: Determine occupancy grid map information.

Specifically, the autonomous driving apparatus determines the occupancy grid map information. The occupancy grid map information includes location information of a static object in a target intersection in an occupancy grid map corresponding to the target intersection. The occupancy grid map (Occupancy Grid Map, OGM) information may be sent by a service device. It may be understood that the occupancy grid map information may provide information about an occupied location in the entire intersection. It should be noted that, in the occupancy grid map, for a point, a probability $p \, (s = 1)$ is used to represent a probability that the point is in a free (Free) state, and $p \, (s = 0)$ is used to represent a probability that the point is in an occupied (Occupied) state. Certainly, a sum of the two is 1. A grid map divides an environment into a series of grids. Each grid is given a probable value, and the probable value indicates a probability that the grid is occupied. For example, the occupancy grid map information may be: $\{(i,j,c)\}_{N_{OGM},M_{OGM}}$, where $i = 1,2, ..., N_{OGM}$, $j = 1,2, ... , M_{OGM}$, $c = 0, 1$, $i$ and $j$ are used to identify horizontal and vertical coordinates of location information in the occupancy grid map, and $c$ is used to represent a probability that the static object is in the occupied state at $(i, j)$. A coordinate system used in the occupancy grid map may be a world coordinate system.

Step S302: Plan a first traveling track based on the occupancy grid map information.

Specifically, the autonomous driving apparatus plans the first traveling track based on the occupancy grid map information. When a static object (for example, a construction area, a vehicle accident area, or a roundabout podium) that affects vehicle passage appears in the target intersection, a traveling track of the vehicle needs to be planned and determined based on a location of the static object, to avoid a safety accident caused by collision between the static object and an autonomous vehicle, ensure safe driving of the autonomous vehicle on a road, and further improve driving safety of the vehicle. It may be understood that the autonomous driving apparatus may further determine a plurality of preset traveling tracks based on the occupancy grid map information.

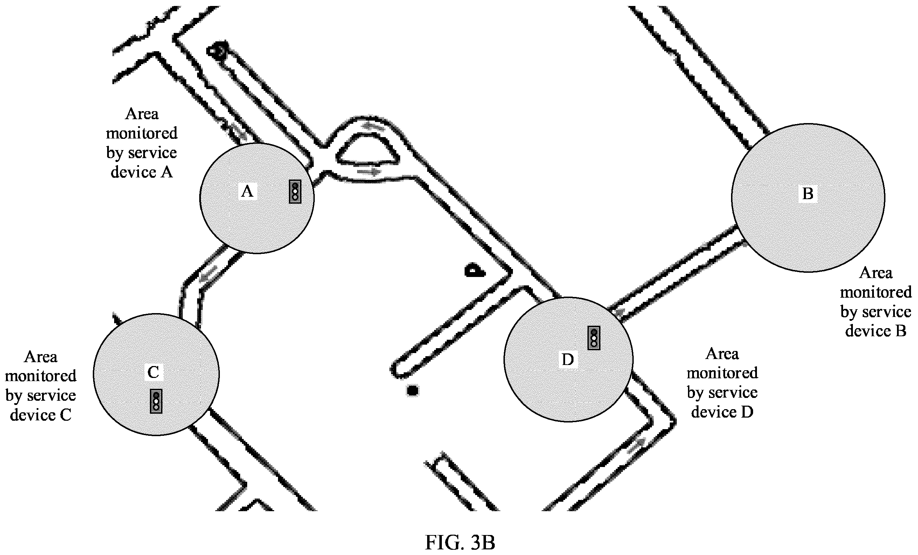

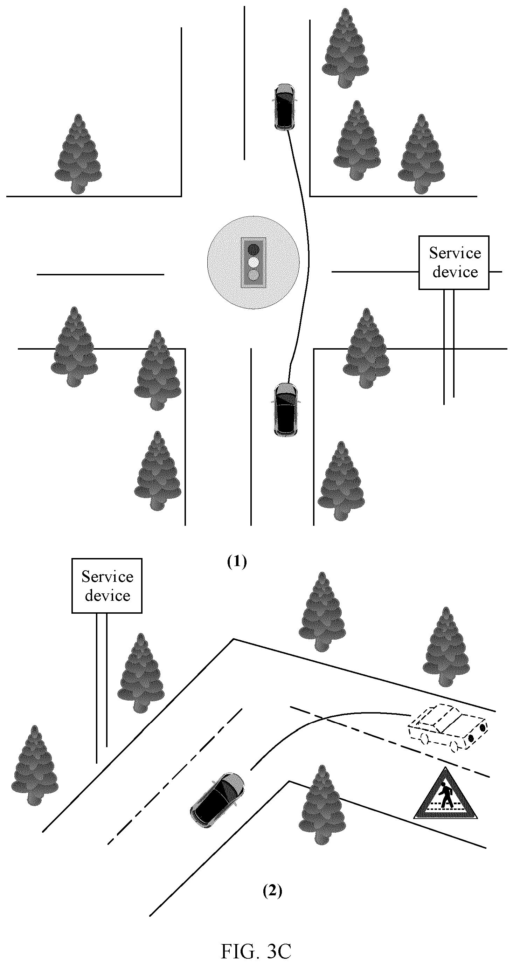

Optionally, when one service device can monitor all road sections in one area, a plurality of service devices may form a vehicle monitoring network to monitor a driving status of a vehicle on a road in a coverage area of the vehicle monitoring network at any time, and communicate with another nearby service device to relay monitor a vehicle flow change in the area. The service device may be a road side unit RSU device. Refer to FIG. 3B and FIG. 3C. FIG. 3B is a schematic diagram in which a plurality of service devices monitor an area according to an embodiment of this application, and FIG. 3C is a schematic diagram of two cases in which a service device monitors a road section according to an embodiment of this application. It may be understood that, as shown in FIG. 3B, when the service device is the RSU device, and a first vehicle travels to a coverage area of an RSU device A or is about to travel to a coverage area of an RSU device A, the RSU device A may send the occupancy grid map information to the first vehicle. (1) in FIG. 3C is a schematic diagram in which an RSU device monitors a vehicle passing through a traffic light intersection. When the RSU device detects that the first vehicle needs to pass through the traffic light intersection, the RSU device may obtain information about a static object at the traffic light intersection, then infer, based on a current situation around the traffic light intersection, location information of the static object at the traffic light intersection on a grid map corresponding to the traffic light intersection, and generate occupancy grid map information corresponding to the traffic light intersection, to ensure that the first vehicle infers a correct first traveling track and smoothly passes through the traffic light intersection. (2) in FIG. 3C is a schematic diagram in which an RSU device monitors a vehicle passing through a curve. When the RSU device detects that the first vehicle needs to pass through the curve, the RSU device may further obtain a location and a curvature of the curve, and generate occupancy grid map information corresponding to the curve, to ensure that the first vehicle infers a proper first traveling track, so as to ensure that the first vehicle is not blocked by sight when passing through the curve, avoiding a traffic accident. It should be noted that a size of an area range corresponding to an intersection monitored by the service device is not specifically limited in this application.

Step S303: Determine, based on the first traveling track currently planned by the first vehicle, a traveling track set corresponding to the first traveling track.

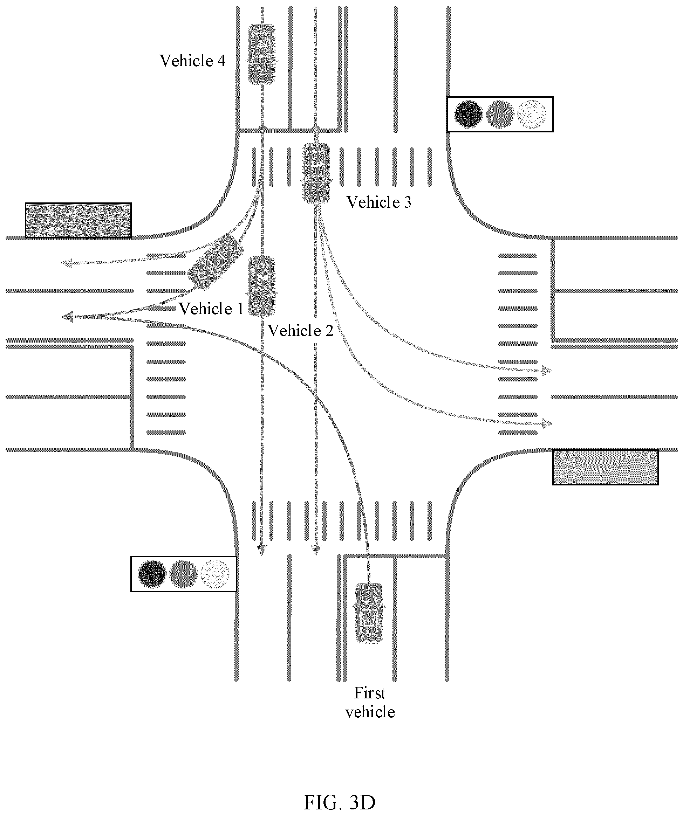

Specifically, the autonomous driving apparatus determines, based on the first traveling track currently planned by the first vehicle, the traveling track set corresponding to the first traveling track. The traveling track set includes one or more predicted second traveling tracks separately corresponding to N second vehicles, the N second vehicles are all vehicles in an area range corresponding to the first vehicle at a current intersection, a shortest distance between any second traveling track in the traveling track set and the first traveling track is within a first distance threshold, and N is a positive integer. First, it may be understood that there are a plurality of second vehicles at the intersection, and each of the plurality of second vehicles may correspond to one or more pieces of traveling information (for example, going straight, turning left, or turning right). In addition, it may be further understood that when the vehicles travel on the road, the vehicles need to keep a safety distance from each other, to avoid an accident caused by a vehicle collision. Therefore, a shortest distance between any second traveling track in the traveling track set and the first traveling track is within the first distance threshold. A distance between the first traveling track currently planned by the first vehicle and one or more second traveling tracks corresponding to the second vehicle also needs to be maintained. If the distance is less than the safety distance, it is considered that the first vehicle and the second vehicle may collide with each other. Therefore, the autonomous driving apparatus may select, from the plurality of second traveling tracks of the second vehicle in the area range of the intersection based on the first distance threshold, a track that affects traveling of the first vehicle as the second traveling track in the traveling track set. FIG. 3D is a schematic diagram of a traveling track of a vehicle at an unprotected left-turn intersection according to an embodiment of this application. As shown in FIG. 3D, there are four second vehicles: a vehicle 1, a vehicle 2, a vehicle 3, and a vehicle 4 in the area range of the intersection. In a plurality of predicted second traveling tracks of the four second vehicles, shortest distances (the shortest distance is 0) between at least three second traveling tracks and the first traveling track are within the first distance threshold. Therefore, the three second traveling tracks may affect the traveling track of the first vehicle. It should be noted that the first distance threshold is not specifically limited in this embodiment of this application, because vehicles in different types and series have different requirements on the safety distance (the first distance threshold). For example, when both the first vehicle and the second vehicle are trucks, a first distance threshold is greater than a first distance threshold when both the first vehicle and the second vehicle are cars.

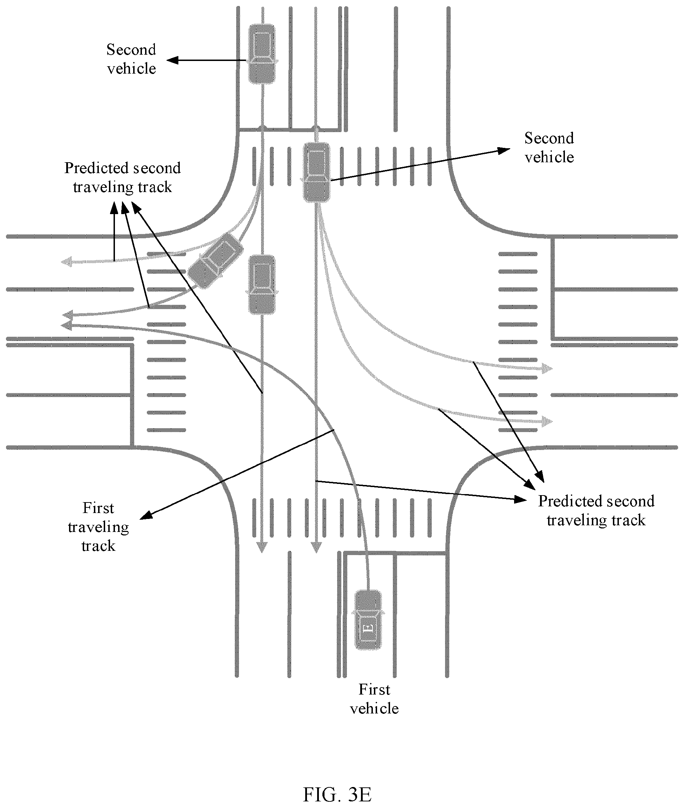

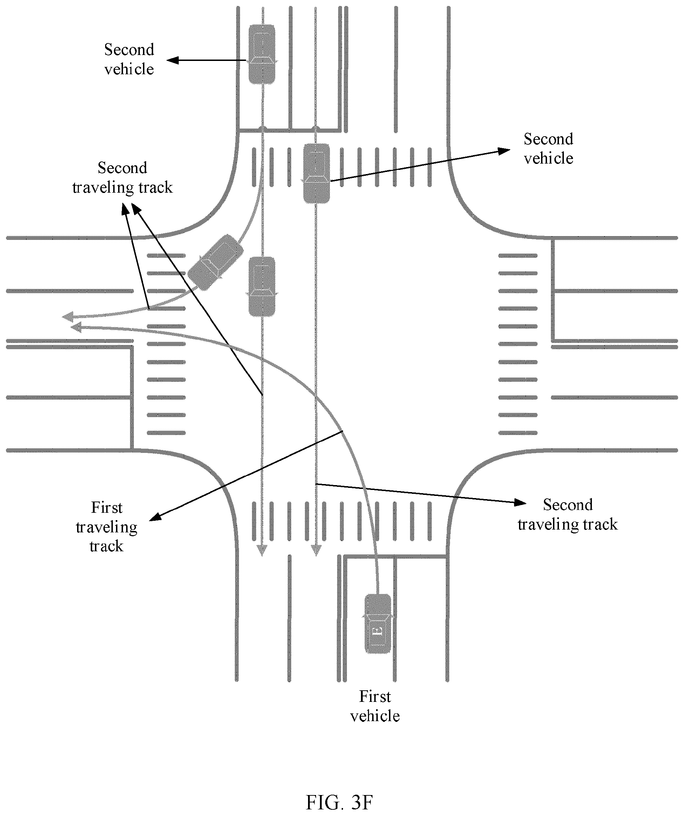

FIG. 3E is a schematic diagram of a plurality of predicted second driving tracks respectively corresponding to a plurality of second vehicles according to an embodiment of this application. When traveling at an intersection, a vehicle usually moves at the intersection according to a specific traveling rule (for example, a vehicle flow at the intersection), and different vehicles in a same lane may travel in different directions. For example, the second vehicles shown in FIG. 3E may correspond to a plurality of preset traveling tracks, for example, going straight, turning left, or turning right. It should be noted that predicted second track information may be obtained by using map information or image information provided by the service device that monitors the target intersection. The map information may be high definition map information, including an intersection structure of the target intersection, a vehicle location of the second vehicle, a lane in which the second vehicle is located, and the like. FIG. 3F is a schematic diagram of selecting a traveling track set from a plurality of traveling tracks according to an embodiment of this application. For example, as shown in comparison between FIG. 3E and FIG. 3F, one or more second traveling tracks corresponding to each second vehicle are predicted based on location information of the second vehicle at the target intersection, and then second traveling tracks that affect traveling of the first vehicle are selected from a plurality of predicted second traveling tracks of the second vehicle at the target intersection. These second traveling tracks are the traveling track set. Therefore, in this embodiment of this application, the traveling rule of the vehicle is first determined as prior information in the autonomous driving technology. When passing through the target intersection in a coverage area of a related service device, the first vehicle may receive vehicle information that is of the second vehicle at the target intersection and sent by the related service device, to determine the plurality of predicted second traveling tracks corresponding to the second vehicle.

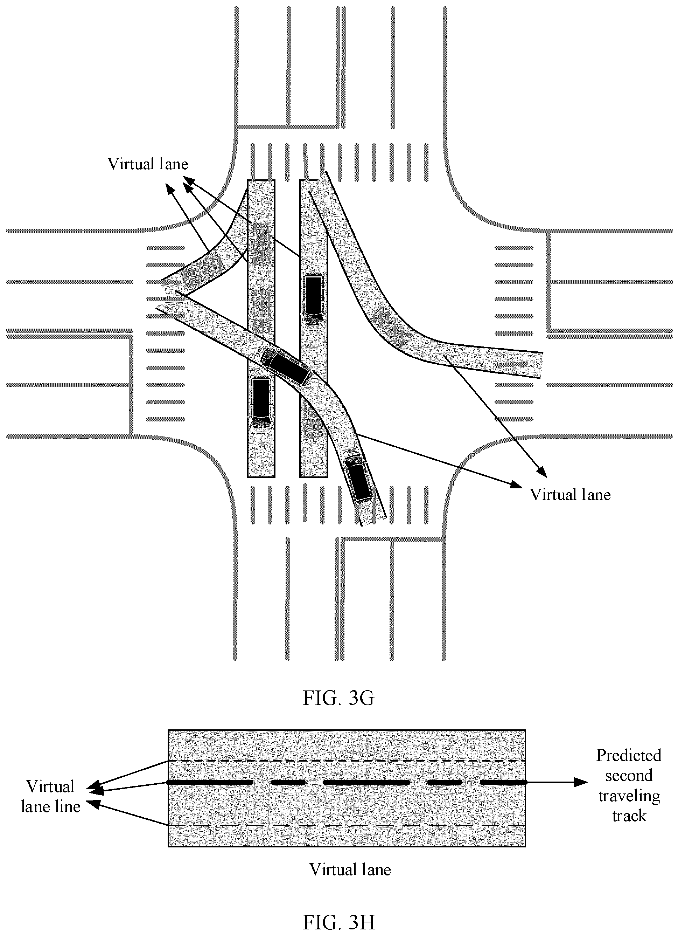

Optionally, the second traveling track is a track on a plurality of virtual lanes in the area range, the plurality of virtual lanes are used by the second vehicles to travel in the area range, and the plurality of virtual lanes are extended lanes that are respectively corresponding to a plurality of lanes obtained based on map information in the area range. It may be understood that when traveling at an intersection, vehicles at the intersection usually form vehicle flows and move forward at the intersection. In other words, the vehicle flow travels in a virtual lane at the target intersection, and the virtual lane is a lane that is at the target intersection and that extends from an original driving lane. A center line of the virtual lane may be set as a second traveling track of the vehicle. Refer to FIG. 3G and FIG. 3H. FIG. 3G is a schematic diagram of a virtual lane at an intersection according to an embodiment of this application, and FIG. 3H is a schematic diagram of a correspondence between a virtual lane and a preset traveling track according to an embodiment of this application. It may be understood that, as shown in FIG. 3G, one lane may correspond to a plurality of virtual lanes at the target intersection, and the virtual lane may be an ordered vehicle flow formed by a vehicle running at the intersection based on a driving habit of the vehicle. However, as shown in FIG. 3H, one virtual lane may correspond to a plurality of virtual lane lines, but corresponds to only one predicted second traveling track. The predicted second traveling track may be any one of the plurality of virtual lane lines on the virtual lane. For example, the plurality of virtual lane lines may be a center line of a corresponding virtual lane at the target intersection provided by a high definition map, or may be a third or fourth division line on the virtual lane. Therefore, any virtual lane line on the virtual lane may be set as a traveling track of the vehicle flow. Therefore, a virtual lane in which the second vehicle may travel at the intersection may be determined based on location information of the second vehicle at the target intersection (the second vehicle is any one of all vehicles in an area range corresponding to a current intersection), to predict one or more second traveling tracks corresponding to the second vehicle. Then, the one or more predicted second traveling tracks may be determined as the prior information in the autonomous driving technology, to determine the intersection track segment between the second traveling track and the first traveling track currently planned by the first vehicle. Therefore, according to the method for determining an intersection track segment between vehicles based on prior information determined based on a virtual lane and map information, there is no need to communicate with a plurality of vehicles at a target intersection in real time, and there is no need to worry that a right of way is unclear. Therefore, an intersection track segment determined by an autonomous vehicle can be more accurate, and it can be effectively ensured that the autonomous vehicle can safely and efficiently pass through the intersection. Optionally, the autonomous driving apparatus determines M traveling tracks, where the M traveling tracks include a predicted traveling track of each of the N second vehicles, and M is a positive integer less than or equal to N; and traverses the M traveling tracks, to determine the traveling track set from the M traveling tracks. All the second traveling tracks corresponding to the N second vehicles in the area range corresponding to the intersection may be traversed, and the second traveling track that affects traveling of the first vehicle is selected as a traveling track in the traveling track set. According to the method for finally selecting the second traveling track that affects traveling of the first vehicle by traversing all preset track information, the second traveling track that affects the first traveling track can be more accurately determined, so that the second vehicle that intersects with the first vehicle in the area range corresponding to the intersection can be effectively avoided, and it is ensured that the first vehicle can safely and efficiently pass through the intersection.

Step S304: Determine an intersection track segment on each second traveling track in the traveling track set.

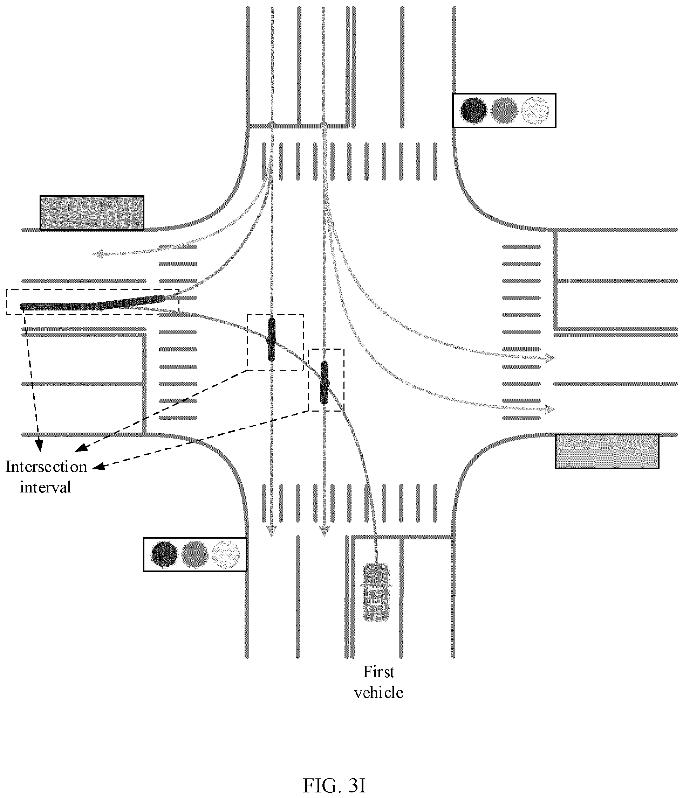

Specifically, the autonomous driving apparatus determines an intersection track segment on each second traveling track in the traveling track set. A shortest distance between any point on the intersection track segment and the first traveling track is within a second distance threshold. It should be noted that the intersection track segment is a place where the first vehicle and the second vehicle intersect on the second traveling track. FIG. 3I is a schematic diagram of determining an intersection track segment between a first vehicle and a second vehicle according to an embodiment of this application. As shown in FIG. 3I, when the first vehicle turns left at the target intersection, an intersection track segment on each second traveling track in the traveling track set in the area range of the intersection may be determined. It should be noted that when a vehicle travels on a road, if two vehicles are located within a specific distance, it may be considered that the two vehicles intersect. Therefore, if an intersection track segment between the first vehicle and the second vehicle on the second traveling track needs to be determined, it needs to be determined that a shortest distance from any point of a track segment on the second traveling track to the first traveling track is within a specific range (the second distance threshold). If the distance is greater than the distance range, it is considered that a probability of collision between the first vehicle and the second vehicle is very low. It should be noted that the second distance threshold is not specifically limited in this embodiment of this application either. Because widths and sizes of vehicles in different types and series are different, when the vehicles travel on a same traveling track, distances for collision between the different vehicles change accordingly. For example, when both the first vehicle and the second vehicle are cars driving on a virtual lane, the first vehicle and the second vehicle do not collide with each other. When both the first vehicle and the second vehicle are trucks driving on the same virtual lane, the two trucks may collide with each other. Therefore, the second threshold varies with vehicle type information and vehicle series information of the first vehicle and the second vehicle. It may be understood that the first distance threshold is greater than the second distance threshold.

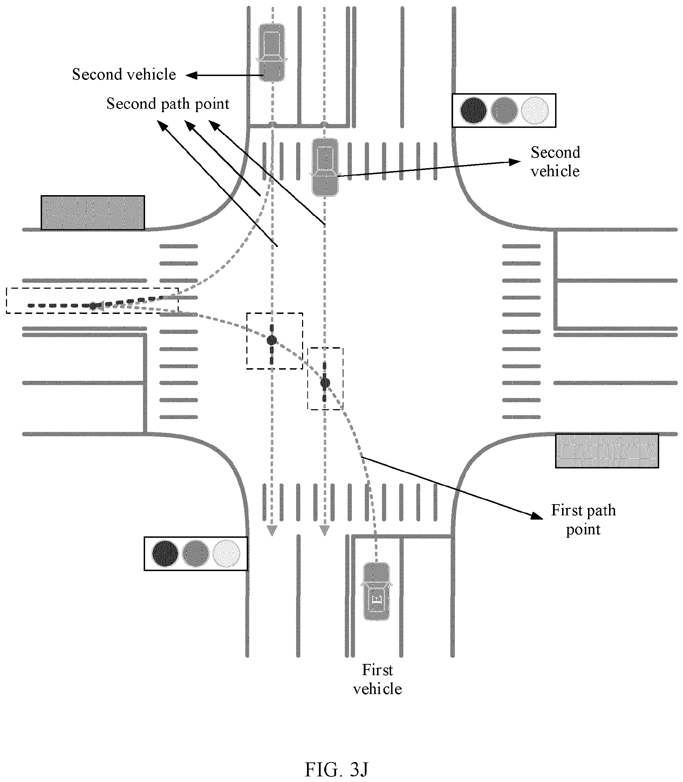

Optionally, that the autonomous driving apparatus determines an intersection track segment on each second traveling track in the traveling track set includes: The autonomous driving apparatus separately determines first path points evenly distributed on the first traveling track at a preset interval and second path points evenly distributed on each second traveling track in the traveling track set at the preset interval; determines a plurality of interaction points from all the second path points, where a shortest distance between each of the plurality of interaction points and one of the first path points is within the second distance threshold; and determines that a track segment consisting of interaction points on each second traveling track in the traveling track set is the intersection track segment corresponding to each second traveling track in the traveling track set. FIG. 3J is a schematic diagram of determining an intersection track segment based on path points according to an embodiment of this application. As shown in FIG. 3J, second path points of a plurality of second traveling tracks (for example, a total of Q second traveling tracks) in the traveling track set may be cyclically extracted, and

$$P_k(i) = \left\{ \left( x_k(i), y_k(i), \theta_k(i) \right) \right\}_{S_k}$$

each path point in a path point column $P_k(i)$, $(i = 1,2, ..., S_k)$ corresponding to the second traveling track is traversed, where S is a total quantity of path points in a $k^{th}$ traveling track, k is the $k^{th}$ traveling track in the Q second traveling tracks, i is an $i^{th}$ path point in the S path points, and $(x_k(i),y_k(i),\theta_k(i))$ is coordinates in the world coordinate system and may be obtained by using the GPS. After coordinates of each path point are obtained, a shortest distance $d(P_k(i))$ of a

$$P_0(i) = \left\{ \left( x_0(i), y_0(i), \theta_0(i) \right) \right\}_{S_0}$$

path point column of the first traveling track (for example, the first path points shown in FIG. 3J) corresponding to the first vehicle is calculated. If a shortest distance between each point in the $k^{th}$ traveling track and the first traveling track is greater than the second distance threshold, there is no intersection track segment between the route and the ego vehicle. Otherwise, a path point that is in the $k^{th}$ traveling track and whose shortest distance from the first traveling track is less than the second distance threshold is denoted as an interaction point, and a track segment $\{P_k(i)\}, i \in [a, b]$ consisting of interaction points is denoted as an intersection track segment. A shortest distance between each of the plurality of interaction points and one of the first path points is within the second distance threshold, for example, a track segment marked by a short line in a dashed-line box shown in FIG. 3I. Therefore, when the intersection track segment is determined, shortest distances between path points on the first traveling track and the second traveling track may be matched to determine each interaction point whose shortest distance to one of the first path points on the second traveling track is within the second distance threshold, and a track segment formed by the plurality of interaction points is determined as the intersection track segment. In this way, a range of occupied track segment of the traveling track is determined in advance based on a predicted traveling track of a vehicle. This can avoid a safety hazard caused because a range of an intersection track segment cannot be determined in time because vehicles cannot be accurately monitored in real time, thereby ensuring safe driving of the first vehicle on a road, and avoiding a safety accident caused by collision.

Step S305: Separately determine, based on current speeds and current locations that correspond to the N second vehicles, intersection times at which the N second vehicles arrive at the intersection track segment.

Specifically, the autonomous driving apparatus separately determines, based on the current speeds and the current locations that correspond to the N second vehicles, the intersection times at which the N second vehicles arrive at the intersection track segment. It may be understood that each second traveling track in the traveling track set is corresponding to one second vehicle. Therefore, an intersection track segment on each second traveling track in the traveling track set has an intersection time at which the second vehicle corresponding to the intersection track segment arrives at the intersection track segment. Therefore, after determining the intersection track segment, the autonomous driving apparatus needs to determine an intersection time at which each of the N second vehicles arrives at one of the plurality of intersection track segments corresponding to the second vehicle, so as to determine, based on the speed of the first vehicle, whether the first vehicle needs to yield to the second vehicle or whether the second vehicle needs to yield to the first vehicle when the first vehicle arrives at the intersection track segment. In this way, proper traveling speed information of the first vehicle is calculated. This can prevent the first vehicle from sudden acceleration and sudden braking, so that a passenger has more comfortable and smoother ride experience.

Optionally, the intersection time includes an intersection start time, and the separately determining, based on current speeds and current locations that correspond to the N second vehicles, intersection times at which the N second vehicles arrive at the intersection track segment includes: determining, based on the current speeds corresponding to the N second vehicles, intersection passing time in which each of the N second vehicles passes through the intersection track segment on the one or more corresponding predicted second traveling tracks; and determining, based on the current speeds corresponding to the N second vehicles, the current locations corresponding to the N second vehicles, and a location corresponding to the intersection track segment on each second traveling track in the traveling track set, an intersection start time at which each of the N second vehicles arrives at the intersection track segment on the one or more corresponding predicted second traveling tracks. It may be understood that, after the intersection track segment between the first vehicle and each of the N second vehicles is determined, a time at which each of the N second vehicles arrives at the intersection track segment corresponding to the second vehicle and time in which each of the N second vehicles passes through the intersection track segment corresponding to the second vehicle further need to be determined, so that the first vehicle can calculate proper and more refined traveling speed information of the first vehicle based on an intersection start time and intersection passing time corresponding to each of the N second vehicles. This can prevent the first vehicle from sudden acceleration and sudden braking, so that the passenger has more comfortable and smoother ride experience.

Optionally, the determining, based on the current speeds corresponding to the N second vehicles, intersection passing time in which each of the N second vehicles passes through the intersection track segment on the one or more corresponding predicted second traveling tracks includes: determining a movement track segment of each of the N second vehicles on the one or more corresponding predicted second traveling tracks, where the movement track segment is a track segment projected on the second traveling track by the second vehicle when the second vehicle moves according to the second traveling track; and determining, based on a moving speed of the movement track segment, the intersection passing time in which the movement track segment passes through the intersection track segment, where the moving speed of the movement track segment is the current speed of the second vehicle. When passing time for the second vehicle to pass through the intersection track segment is determined, the passing time may be determined based on a distance between the movement track segment projected by the second vehicle and the intersection track segment. When the distance between the movement track segment and the intersection track segment is a third distance threshold, it may be considered that the second vehicle is passing through the intersection track segment. The intersection passing time for the movement track segment to pass through the intersection track segment may be determined based on a moving speed of the movement track segment and a length of the intersection track segment. The movement track segment is a track segment that is projected by the second vehicle and on the second traveling track corresponding to the intersection track segment, and the moving speed of the movement track segment is the current speed of the second vehicle. It should be further noted that, each point in a vehicle point cloud of the second vehicle may be mapped to the second traveling track by using the vehicle point cloud of the second vehicle (for example, a moving target point cloud determined by a lidar on the first vehicle), and the movement track segment projected on the second traveling track when the second vehicle moves according to the second traveling track is determined, so that an occupied movement track segment on the second traveling track can be tracked instead of conventionally tracking a moving object. This reduces dependency on lateral object detection and tracking, and improves prediction robustness. Therefore, it can be effectively ensured that the autonomous vehicle can safely and efficiently pass through the intersection.

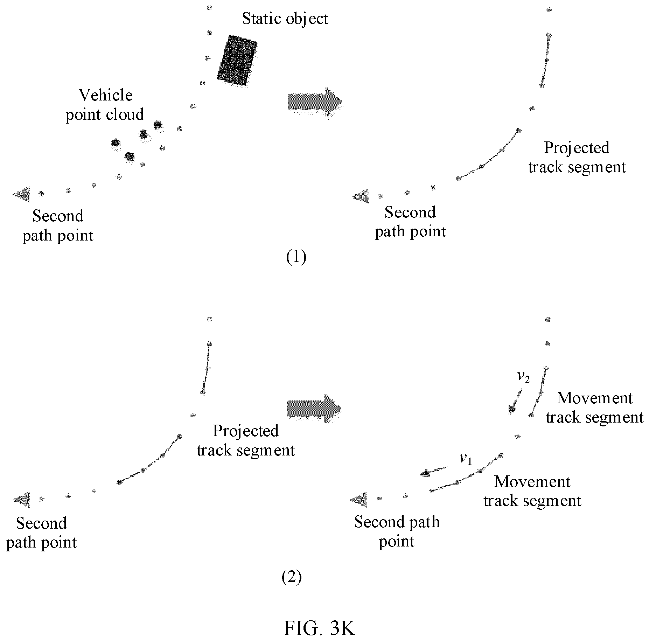

For example, refer to FIG. 3K. FIG. 3K is a schematic diagram of determining a movement track segment on a second traveling track based on a vehicle point cloud according to an embodiment of this application. After each path point

$$P_k(i) = \left\{ \left( x_k(i), y_k(i), \theta_k(i) \right) \right\}_{S_k}$$

in a path point column $P_k(i)$, ($i = 1, 2, \ldots, S_k$) corresponding to each second traveling track in the traveling track set is traversed, a

$$\left\{ \left( x_g(i), y_g(i) \right) \right\}_{S_g}$$

vehicle point cloud corresponding to each of the N second vehicles is traversed, and a distance from each point in the vehicle point cloud to each point of a second path point on the second traveling track corresponding to the vehicle point cloud is calculated, where g is a $g^{th}$ second vehicle of the N second vehicles, and S is a total quantity of points in the vehicle point cloud corresponding to the $g^{th}$ second vehicle, i is an $i^{th}$ point in the S vehicle point clouds, and ($x_g(i)$, $y_g(i)$) is coordinates in a coordinate system in which the first vehicle is used as an origin. If the distance is less than the third distance threshold, as shown in (1) in FIG. 3K, it is considered that the point is a target point and occupies the second path point. That is, it is considered that the $g^{th}$ second vehicle travels on the second traveling track. A second path point closest to the first vehicle and a second path point farthest from the first vehicle that are occupied by each target point form a projected track segment of the vehicle. As shown in (2) in FIG. 3K, the current speed of the second vehicle is $\left\{ V_g(i) \right\}_{S_g}$, where $i = 1, 2, \ldots, S$, that is, a moving speed of the movement track segment is $V_1 = V_g(i)$. Similarly, a projected track segment of a static object OGM from which a distance to the route point is less than a fourth distance threshold may be further obtained, and a speed of the track segment is $V_2 = 0$. It should be noted that coordinates of the vehicle point cloud may also be coordinates in the world coordinate system, and may be determined by using a radar and a positioning system on the intelligent vehicle 002. By matching a moving target point cloud with a lane driving route, a range and a moving speed of an occupied track segment of the route are determined, and the occupied track segment is tracked instead of conventionally tracking the moving object. This reduces dependency on lateral object detection and tracking, and improves prediction robustness.

Step S306: Determine the speed of the first vehicle based on the intersection track segment on each second traveling track in the traveling track set and the corresponding intersection time.

Specifically, the autonomous driving apparatus determines the speed of the first vehicle based on the intersection track segment on each second traveling track in the traveling track set and the corresponding intersection time. In this way, proper and more refined traveling speed information of the vehicle is calculated based on the intersection track segment and the intersection time and with reference to a surrounding condition of the vehicle (that is, a current speed and a current location of each second vehicle). This can prevent the first vehicle from sudden acceleration and sudden braking, so that the passenger has more comfortable and smoother ride experience.

The determining the speed of the first vehicle based on the intersection track segment on each second traveling track in the traveling track set and the corresponding intersection time includes: determining a location relationship between the intersection track segment and the first vehicle based on the intersection track segment on each second traveling track in the traveling track set and the corresponding intersection time; determining, according to a preset right-of-way rule, a right-of-way relationship between the first traveling track and the second traveling track corresponding to the intersection track segment, where the right-of-way relationship is priorities of a vehicle running on the first traveling track and a vehicle running on the second traveling track when passing through the intersection track segment; and determining, based on the right-of-way relationship and the location relationship, that a traveling speed with a minimum cost function value in a plurality of traveling speeds is the speed of the first vehicle. A location relationship between the intersection track segment on each second traveling track and the first vehicle is first determined based on the intersection track segment on each second traveling track in the traveling track set and the intersection time corresponding to the intersection track segment, and the traveling speed with the minimum cost function value in the plurality of traveling speeds of the first vehicle is determined as the speed of the first vehicle based on the location relationship. The cost function mainly considers upper and lower curvature limits of the curve (the upper limit corresponds to a maximum acceleration of the curve, and the lower limit corresponds to a maximum deceleration of the curve). For example, the cost function may be determined based on a preference of a passenger in a vehicle, a change rate of a speed and curvature of the vehicle, performance of the vehicle, and the like. This can prevent the first vehicle from sudden acceleration and sudden braking, so that the passenger has more comfortable and smoother ride experience. It may be understood that the cost function is determined based on a shortest distance between the first vehicle and the second vehicle and/or the static object, a final speed of the first vehicle, a maximum acceleration of the first vehicle, and a maximum deceleration of the first vehicle. In addition, speed planning policies for different routes may be further determined according to the preset right-of-way rule, to effectively ensure that the autonomous vehicle can safely and efficiently pass through the intersection. The right-of-way relationship is priorities of a vehicle running on the first traveling track and a vehicle running on the second traveling track when passing through the intersection track segment. For example, for a turning unprotected intersection, a game policy of turning yields to straight-through is used. If the ego vehicle goes straight, a preemption policy is used for motion prediction on an interaction route. If the ego vehicle turns left or right, a concession policy is used for motion prediction on the interaction route.

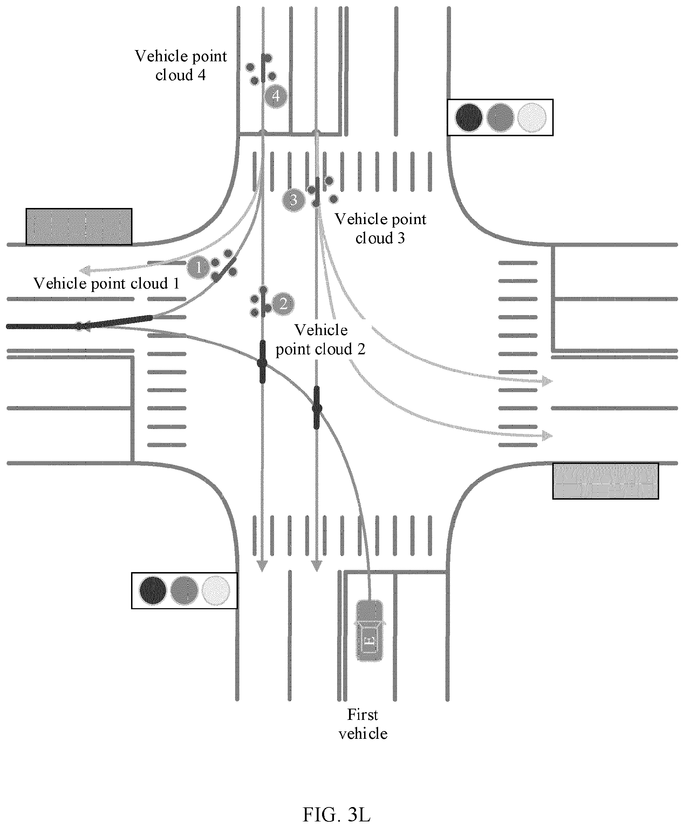

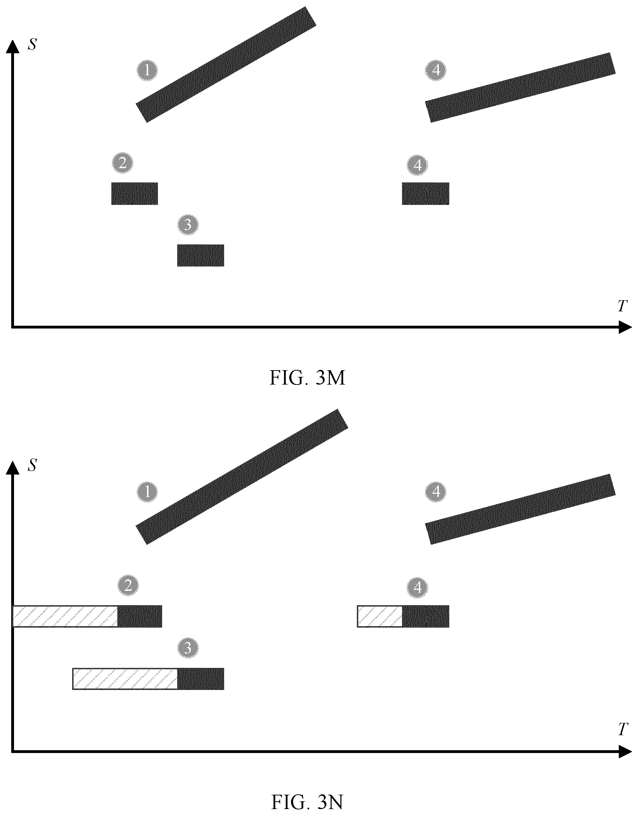

Optionally, the determining a location relationship between the intersection track segment and the first vehicle based on the intersection track segment on each second traveling track in the traveling track set and the corresponding intersection time includes: constructing an ST graph of the first vehicle and the intersection track segment by using the first vehicle as an origin; and mapping, based on the intersection time, a location of the intersection track segment relative to the first vehicle to the ST graph, and determining the location relationship between the intersection track segment and the first vehicle. It may be understood that a distance and time ST relationship graph between the first vehicle and the intersection track segment is established by using a current location and current time of the first vehicle as an origin, and the intersection track segment corresponding to each second traveling track in the traveling track set is mapped to the ST graph in which the first vehicle is used as the origin. Based on a shadow area in the ST graph, a distance between the first vehicle and each position on the intersection track segment in a traveling distance of the first vehicle can be clearly determined, so that a plurality of traveling speeds corresponding to the first vehicle are accurately calculated, and a safer and more proper speed curve is planned based on the plurality of traveling speeds, to ensure orderly and efficient passing of vehicles at the intersection. It may be understood that the ST graph is a graph of a relationship between a distance and time, and represents a location relationship of a current location of a target object at a different time point relative to the origin. For example, in the ST graph in this embodiment of this application, a vertical axis is displacement, a horizontal axis is time, and the current location and the current time of the first vehicle are origins of the vertical axis and the horizontal axis. If at a time t0, an obstacle appears at a location that is at a distance of s0 from the first vehicle, a coordinate point (t0, s0) in the ST graph is occupied. Therefore, the vehicle speed corresponding to the first vehicle is accurately calculated by using the ST graph, so as to plan a safe and proper speed curve, thereby ensuring orderly and efficient passing of vehicles at the intersection. For example, refer to FIG. 3L and FIG. 3M. FIG. 3L is a schematic diagram of an intersection when a first vehicle turns left according to an embodiment of this application, and FIG. 3M is an ST graph of an intersection track segment with the first vehicle shown in FIG. 3L according to an embodiment of this application. As shown in FIG. 3L, when the first vehicle turns left, second vehicles corresponding to a vehicle point cloud 1, a vehicle point cloud 2, a vehicle point cloud 3, and a vehicle point cloud 4 in the intersection may intersect with the first vehicle, and correspondingly form a movement track segment shown in the figure. After determining, based on moving speeds of the vehicle point cloud 1, the vehicle point cloud 2, the vehicle point cloud 3, and the vehicle point cloud 4, intersection times at which the vehicle point cloud 1, the vehicle point cloud 2, the vehicle point cloud 3, and the vehicle point cloud 4 separately arrive at intersection track segments, the intersection track segments and the intersection times are mapped to the distance and time relationship graph between the first vehicle and the intersection track segment. As shown in FIG. 3M, the vehicle point cloud 4 has two intersection track segments that respectively correspond to straight-through and right-turn, and each has a probability of 50%. Therefore, in the ST graph shown in FIG. 3M, there are two segments representing a mapping diagram of the vehicle point cloud 4.

Optionally, the preset right-of-way rule includes: if a right-of-way priority of the second vehicle is higher than a right-of-way priority of the first vehicle, the first vehicle yields to the second vehicle. The right-of-way priority includes: a straight-through priority > a left-turn priority > a left-turn U-turn priority > a right-turn priority, and a main road priority > a branch priority. In the autonomous driving technology, when a vehicle passes through an intersection, intersection with vehicles in a plurality of directions needs to be considered, and a constraint of a traffic driving concept also needs to be considered. For example, when a road ahead is congested and traffic is directed by a law enforcement officer, driving needs to be preferably performed according to a gesture directed by the law enforcement officer. For example, according to a general road driving concept, a vehicle yields to a pedestrian, a branch yields to a main road, and the like. FIG. 3N is another ST graph of an intersection track segment with the first vehicle shown in FIG. 3L according to an embodiment of this application. For example, main road right-of-way time RT1 = 4s, branch RT2 = 0s, straight-through right-of-way time LT1 = 6s, left-turn LT2 = 3s, left-turn U-turn LT3 = 2s, and right-turn LT4 = 0s. In an example scenario, the first vehicle turns left on the main road, and therefore priority time is 7s. The vehicle point cloud 2 and the vehicle point cloud 3 100% go straight on the main road, and therefore priority time of the two vehicle point clouds relative to the first vehicle in an interaction area is 3s (=10s - 7s). The vehicle point cloud 1 100% turns right on the main road, and therefore priority time is 0s (4s < 7s). The vehicle point cloud 4 50% turns right on the main road and 50% goes straight on the main road. Therefore, there are two intersection track segments on the ST graph, priority time for going straight is 1.5s (= 0.5 x (10s - 7s)), and priority time for turning right is 0. As shown in FIG. 3N, an area occupied by each vehicle point cloud on the ST graph is extended based on priority time of an interactive vehicle point cloud. In a possible implementation, if a first vehicle 002 detects that a traffic management personnel directs traffic at an intersection, the first vehicle 002 may identify an indication of the traffic management personnel by using a camera or the like, determine traveling tracks of the first vehicle and the second vehicle, and further determine an intersection track segment and an intersection time between the vehicles, to prevent traffic from being affected because the indication of the traffic management personnel cannot be identified, resulting in a safety accident and affecting traffic operations. Therefore, in this embodiment of this application, the autonomous driving technology that complies with a right-of-way rule such as turning yields to straight-through or right-turn yields to left-turn is implemented, so that driving priorities of vehicles at an intersection can be specified, and orderly and efficient passing of the vehicles at the intersection can be ensured.

It may be understood that, speed curve planning may be performed on an extended ST graph. Then, a speed curve with a minimum cost function is found and used as the vehicle speed of the first vehicle. Optionally, the cost function includes:

$$\mathrm{C} = a_1 k_{max} + a_2 k_{min} + a_3 \frac{1}{l_{min}} + a_4 \frac{1}{k_{end}}$$

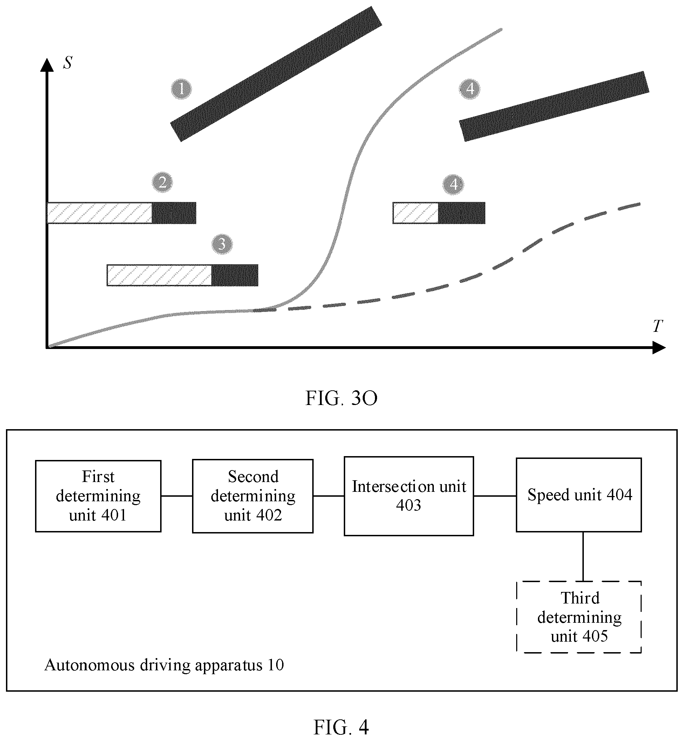

, where $k_{max}$ corresponds to a maximum value in slopes of the speed curve, that is, a maximum acceleration of a speed of a vehicle, $k_{min}$ corresponds to a minimum value in the slopes of the speed curve, that is, a maximum deceleration of the speed of the vehicle, $l_{min}$ is a minimum s-axis spacing from the occupied area, $k_{end}$ is a slope of an end-point speed curve, and $a_1$, $a_2$, $a_3$, $a_4$ are corresponding weight coefficients. For example, when passengers are respectively a young person pursuing a speed and an elderly person pursuing a smooth speed, and other ride conditions are the same, a weight coefficient $a_1$ corresponding to a vehicle $k_{max}$ taken by the young person is greater than a weight coefficient $a_1$ corresponding to a vehicle $k_{max}$ taken by the elderly person. For another example, to ensure safety, a sum of weight coefficients $a_1$, $a_2$, $a_3$, $a_4$ may be a fixed threshold. When $a_1$ becomes larger, remaining parts need to be correspondingly reduced. For another example, to ensure ride experience and make the first vehicle efficiently pass through the target intersection, a value range may be separately set for $a_1$, $a_2$, $a_3$, $a_4$. Values of $a_1$, $a_2$, $a_3$, $a_4$ are determined based on vehicle type and series information of the first vehicle. When performance of a vehicle A is higher than performance of a vehicle B, a weight coefficient $a_1$, $a_2$, $a_3$, $a_4$ corresponding to the vehicle A is greater than a weight coefficient $a_1$, $a_2$, $a_3$, $a_4$ corresponding to the vehicle B. This is not specifically limited in this application. For example, refer to FIG 3O. FIG. 3O is still another ST graph of an intersection track segment with the first vehicle shown in FIG. 3L according to an embodiment of this application. As shown in FIG. 3O, a dashed-line speed curve in FIG. 3O is smoother, but a speed at an end point is low. Therefore, a cost function of the dashed line is greater than a cost function of the solid line. Therefore, a solid-line speed curve is optimal, and the vehicle speed of the first vehicle shown in FIG. 3L should be the solid-line speed curve. For another example, if a range between an intersection start time between the first vehicle and the second vehicle and a current time exceeds a specific threshold (for example, when the first vehicle arrives at the intersection, a vehicle 4 arrives at the intersection track segment 10 minutes later), even if a right-of-way priority of the second vehicle is higher than a right-of-way priority of the first vehicle, the first vehicle does not need to yield to the second vehicle, and may directly pass through the intersection. That is, in the solid-line speed curve shown in FIG. 3O, the first vehicle takes precedence over the vehicle 4 to pass through the target intersection. It may be understood that, if the range between the intersection start time between the first vehicle and the second vehicle and the current time exceeds the specific threshold, considering that the right-of-way priority of first vehicle is lower than that of the second vehicle, the first vehicle yields to the second vehicle, the first vehicle waits for the second vehicle for a long time, and a cost function of a speed curve corresponding to the first vehicle increases. Therefore, the first vehicle may preferably pass when the range between the intersection start time between the first vehicle and the second vehicle and the current time exceeds the specific threshold. Therefore, the cost function may be determined based on a preference of a passenger in a vehicle, a change rate of a speed and curvature of the vehicle, performance of the vehicle, and the like. This can prevent the first vehicle from sudden acceleration and sudden braking, so that the passenger has more comfortable and smoother ride experience. In addition, speed planning policies for different routes may be further determined according to the preset right-of-way rule, to effectively ensure that the autonomous vehicle can safely and efficiently pass through the intersection.

During implementation of this embodiment of this application, it can be learned that in a process in which an autonomous vehicle passes through an intersection, a vehicle speed and a traveling track of a vehicle at the intersection need to be always concerned, so as to further plan a traveling track and a speed of the ego vehicle, and avoid a collision accident during moving of the vehicle. However, in an actual driving process, for example, at an intersection with no clear right of way, because the right of way is unclear, the autonomous vehicle cannot simultaneously communicate with vehicles in different directions to accurately obtain traveling information of the vehicles, and cannot clearly determine moving intents (for example, going straight, going left, or going right) of the vehicles. Consequently, an intersection with another vehicle usually cannot be accurately predicted, and further, it cannot be effectively ensured that the autonomous vehicle can safely and efficiently pass through the intersection. Therefore, it can be learned that, if driving safety of a vehicle is ensured during autonomous driving, an intersection track segment and an intersection time during driving of the vehicle need to be accurately determined, so as to control the vehicle to safely and efficiently pass through an intersection and move forward smoothly. It may be understood that, when driving at an intersection, a vehicle usually moves forward at the intersection according to a specific traveling rule, for example, a vehicle flow formed at the intersection. Therefore, in this embodiment of this application, the traveling rule of the vehicle may be first determined as prior information in the autonomous driving technology, that is, the predicted second traveling track, and the intersection track segment between the second traveling track and the first traveling track currently planned by the first vehicle is determined based on the predicted second traveling track. For example, when passing through an intersection in a coverage area of a related service device, the first vehicle may receive location information that is of a plurality of second vehicles in an area corresponding to the intersection and that is sent by the related service device, to determine one or more pieces of predicted second traveling information (for example, going straight, going left, or going right) separately corresponding to the plurality of second vehicles. Then, a second traveling track that affects traveling of the first vehicle is selected from a plurality of predicted second traveling tracks respectively corresponding to the plurality of second vehicles in the area, and then an intersection track segment (that is, an intersection of the first vehicle and the second vehicle) and an intersection time of the second traveling track that affects traveling of the first vehicle and the first traveling track are determined. Further, proper and more refined traveling speed information of the vehicle is calculated based on the intersection track segment and the intersection time with reference to a condition around the vehicle (that is, a current speed and a current location of each second vehicle). This can prevent the first vehicle from sudden acceleration and sudden braking, so that a passenger has more comfortable and smoother ride experience. According to the method for determining an intersection track segment between vehicles based on prior information, there is no need to communicate with a plurality of vehicles at an intersection in real time, and there is no need to worry that a moving intent of a vehicle at a target intersection cannot be determined because a right of way is unclear (for example, there is no traffic light). Therefore, an intersection track segment determined by an autonomous vehicle can be more accurate, and it can be effectively ensured that the autonomous vehicle can safely and efficiently pass through the intersection.

The foregoing describes the method in embodiments of this application in detail, and the following provides a related apparatus in embodiments of this application.

FIG. 4 is a schematic diagram of a structure of an autonomous driving apparatus according to an embodiment of this application. The autonomous driving apparatus 10 may include a first determining unit 401, a second determining unit 402, an intersection unit 403, and a speed unit 404, and may further include a third determining unit 405. Detailed descriptions of the units are as follows:

The first determining unit 401 determines, based on a first traveling track currently planned by a first vehicle, a traveling track set corresponding to the first traveling track, where the traveling track set includes one or more predicted second traveling tracks separately corresponding to N second vehicles, the N second vehicles are all vehicles in an area range corresponding to the first vehicle at a current intersection, a shortest distance between any second traveling track in the traveling track set and the first traveling track is within a first distance threshold, and N is a positive integer.

The second determining unit 402 is configured to determine an intersection track segment on each second traveling track in the traveling track set, where a shortest distance between any point on the intersection track segment and the first traveling track is within a second distance threshold.

The intersection unit 403 separately determines, based on current speeds and current locations that correspond to the N second vehicles, intersection times at which the N second vehicles arrive at the intersection track segment.

The speed unit 404 is configured to determine a speed of the first vehicle based on the intersection track segment on each second traveling track in the traveling track set and the corresponding intersection time.

In a possible implementation, the second traveling track is a track on a plurality of virtual lanes in the area range, the plurality of virtual lanes are used by the second vehicles to travel in the target intersection, and the plurality of virtual lanes are extended lanes that are respectively corresponding to a plurality of lanes obtained based on map information in the area range.

In a possible implementation, the first determining unit 401 is specifically configured to: determine M traveling tracks, where the M traveling tracks include a predicted traveling track of each of the N second vehicles, and M is a positive integer less than or equal to N; and traverse the M traveling tracks, to determine the traveling track set from the M traveling tracks.

In a possible implementation, the second determining unit 402 is specifically configured to: separately determine first path points evenly distributed on the first traveling track at a preset interval and second path points evenly distributed on each second traveling track in the traveling track set at the preset interval; determine a plurality of interaction points from all the second path points, where a shortest distance between each of the plurality of interaction points and one of the first path points is within the second distance threshold; and determine that a track segment consisting of interaction points on each second traveling track in the traveling track set is the intersection track segment corresponding to each second traveling track in the traveling track set.

In a possible implementation, the intersection time includes an intersection start time, and the intersection unit 403 is specifically configured to: determine, based on the current speeds corresponding to the N second vehicles, intersection passing time in which each of the N second vehicles passes through the intersection track segment on the one or more corresponding predicted second traveling tracks; and determine, based on the current speeds corresponding to the N second vehicles, the current locations corresponding to the N second vehicles, and a location corresponding to the intersection track segment on each second traveling track in the traveling track set, an intersection start time at which each of the N second vehicles arrives at the intersection track segment on the one or more corresponding predicted second traveling tracks.

In a possible implementation, the speed unit 404 is specifically configured to: determine a location relationship between the intersection track segment and the first vehicle based on the intersection track segment on each second traveling track in the traveling track set and the corresponding intersection time; determine, according to a preset right-of-way rule, a right-of-way relationship between the first traveling track and the second traveling track corresponding to the intersection track segment, where the right-of-way relationship is priorities of a vehicle running on the first traveling track and a vehicle running on the second traveling track when passing through the intersection track segment; and determine, based on the right-of-way relationship and the location relationship, that a traveling speed with a minimum cost function value in a plurality of traveling speeds is the speed of the first vehicle.

In a possible implementation, when the speed unit 404 is configured to determine the location relationship between the intersection track segment and the first vehicle based on the intersection track segment on each second traveling track in the traveling track set and the corresponding intersection time, the speed unit 404 is specifically configured to: construct an ST graph of the first vehicle and the intersection track segment by using the first vehicle as an origin; and map, based on the intersection time, a location of the intersection track segment relative to the first vehicle to the ST graph, and determine the location relationship between the intersection track segment and the first vehicle.

In a possible implementation, when the intersection unit 403 is configured to determine, based on the current speeds corresponding to the N second vehicles, the intersection passing time in which each of the N second vehicles passes through the intersection track segment on the one or more corresponding predicted second traveling tracks, the intersection unit 403 is specifically configured to: determine a movement track segment of each of the N second vehicles on the one or more corresponding predicted second traveling tracks, where the movement track segment is a track segment projected on the second traveling track by the second vehicle when the second vehicle moves according to the second traveling track; and determine, based on a moving speed of the movement track segment, the intersection passing time in which the movement track segment passes through the intersection track segment, where the moving speed of the movement track segment is the current speed of the second vehicle.

In a possible implementation, the preset right-of-way rule includes: if a right-of-way priority of the second vehicle is higher than a right-of-way priority of the first vehicle, the first vehicle yields to the second vehicle. The right-of-way priority includes: a straight-through priority > a left-turn priority > a left-turn U-turn priority > a right-turn priority, and a main road priority > a branch priority.

In a possible implementation, the apparatus further includes a third determining unit 405, configured to: determine occupancy grid map information, where the occupancy grid map information includes location information of a static object in the target intersection in an occupancy grid map corresponding to the target intersection; and plan the first traveling track based on the occupancy grid map information.

It should be noted that for functions of function units in the autonomous driving apparatus 10 described in this embodiment of this application, refer to related descriptions of step S301 to step S306 in the method embodiment described in FIG. 3A. Details are not described herein again.

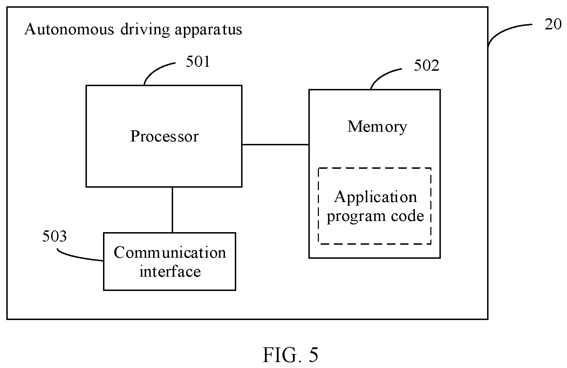

FIG. 5 is a schematic diagram of a structure of another autonomous driving apparatus according to an embodiment of this application. The apparatus 20 includes at least one processor 201, at least one memory 202, and at least one communication interface 203. In addition, the device may further include general components such as an antenna. Details are not described herein.

The processor 201 may be a general-purpose central processing unit (CPU), a microprocessor, an application-specific integrated circuit (application-specific integrated circuit, ASIC), or one or more integrated circuits for controlling program execution of the foregoing solutions.

The communication interface 203 is configured to communicate with another device or a communication network, such as the Ethernet, a radio access network (RAN), a core network, or a wireless local area network (Wireless Local Area Network, WLAN).

The memory 202 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and can be accessed by a computer, but is not limited thereto. The memory may exist independently, and is connected to the processor through a bus. Alternatively, the memory may be integrated with the processor.

The memory 202 is configured to store application program code for executing the foregoing solutions, and the processor 201 controls execution. The processor 201 is configured to execute the application program code stored in the memory 202.

The code stored in the memory 202 may be used to perform the autonomous driving method provided in FIG. 3A, for example, may determine, based on a first traveling track currently planned by a first vehicle, a traveling track set corresponding to the first traveling track, where the traveling track set includes one or more predicted second traveling tracks separately corresponding to N second vehicles, the N second vehicles are all vehicles in an area range corresponding to the first vehicle at a current intersection, a shortest distance between any second traveling track in the traveling track set and the first traveling track is within a first distance threshold, and N is a positive integer; determine an intersection track segment on each second traveling track in the traveling track set, where a shortest distance between any point on the intersection track segment and the first traveling track is within a second distance threshold; separately determine, based on current speeds and current locations that correspond to the N second vehicles, intersection times at which the N second vehicles arrive at the intersection track segment; and determine a speed of the first vehicle based on the intersection track segment on each second traveling track in the traveling track set and the corresponding intersection time.

It should be noted that for functions of function units in the autonomous driving apparatus 20 described in this embodiment of this application, refer to related descriptions of step S301 to step S306 in the method embodiment described in FIG. 3A. Details are not described herein again.

In the foregoing embodiments, descriptions of embodiments have respective focuses. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by the persons skilled in the art that embodiments described in this specification all belong to preferred embodiments, and the involved actions and modules are not necessarily required in this application. In the several embodiments provided in this application, it should be understood that the disclosed apparatuses may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the foregoing integrated unit is implemented in the form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device, and may be specifically a processor in the computer device) to perform all or some of the steps of the methods described in embodiments of this application.

The foregoing storage medium may include: any medium that can store program code, such as a USB flash drive, a removable hard disk, a magnetic disk, an optical disc, a read-only memory (Read-Only Memory, ROM for short), or a random access memory (Random Access Memory, RAM for short).

In conclusion, the foregoing embodiments are merely intended for describing the technical solutions of this application, but not for limiting this application.

**Claims**

1. An autonomous driving method, comprising:

   determining (S303), based on a first traveling track currently planned by a first vehicle, a traveling track set corresponding to the first traveling track, wherein the traveling track set comprises one or more predicted second traveling tracks separately corresponding to N second vehicles, the N second vehicles are all vehicles in an area range corresponding to the first vehicle at a current intersection, a shortest distance between any second traveling track in the traveling track set and the first traveling track is within a first distance threshold, and N is a positive integer;
   determining (S304) an intersection track segment on each second traveling track in the traveling track set, wherein a shortest distance between any point on the intersection track segment and the first traveling track is within a second distance threshold;
   separately determining (S305), based on current speeds and current locations that correspond to the N second vehicles, intersection times at which the N second vehicles arrive at the intersection track segment; and
   determining (S306) a speed of the first vehicle based on the intersection track segment on each second traveling track in the traveling track set and the corresponding intersection time;
   wherein the intersection time comprises an intersection start time, and the separately determining (305), based on current speeds and current locations that correspond to the N second vehicles, intersection times at which the N second vehicles arrive at the intersection track segment comprises:

determining, based on the current speeds corresponding to the N second vehicles, intersection passing time in which each of the N second vehicles passes through the intersection track segment on the one or more corresponding predicted second traveling tracks; and

determining, based on the current speeds corresponding to the N second vehicles, the current locations corresponding to the N second vehicles, and a location corresponding to the intersection track segment on each second traveling track in the traveling track set, an intersection start time at which each of the N second vehicles arrives at the intersection track segment on the one or more corresponding predicted second traveling tracks;

**characterized in that**

the determining (306) a speed of the first vehicle based on the intersection track segment on each second traveling track in the traveling track set and the corresponding intersection time comprises:

determining a location relationship between the intersection track segment and the first vehicle based on the intersection track segment on each second traveling track in the traveling track set and the corresponding intersection time;

determining, according to a preset right-of-way rule, a right-of-way relationship between the first traveling track and the second traveling track corresponding to the intersection track segment, wherein the right-of-way relationship is priorities of a vehicle running on the first traveling track and a vehicle running on the second traveling track when passing through the intersection track segment; and

determining, based on the right-of-way relationship and the location relationship, that a traveling speed with a minimum cost function value in a plurality of traveling speeds is the speed of the first vehicle.

2. The method according to claim 1, wherein the second traveling track is a track on a plurality of virtual lanes in the area range, the plurality of virtual lanes are used by the second vehicles to travel in the area range, and the plurality of virtual lanes are extended lanes that are respectively corresponding to a plurality of lanes obtained based on map information in the area range.

3. The method according to claim 1 or 2, wherein the determining (303), based on a first traveling track currently planned by a first vehicle, a traveling track set corresponding to the first traveling track comprises:

determining M traveling tracks, wherein the M traveling tracks comprise a predicted traveling track of each of the N second vehicles, and M is a positive integer less than or equal to N; and traversing the M traveling tracks, to determine the traveling track set from the M traveling tracks.

4. The method according to claim 3, wherein the determining (304) an intersection track segment on each second traveling track in the traveling track set comprises:

separately determining first path points evenly distributed on the first traveling track at a preset interval and second path points evenly distributed on each second traveling track in the traveling track set at the preset interval; determining a plurality of interaction points from all the second path points, wherein a shortest distance between each of the plurality of interaction points and one of the first path points is within the second distance threshold; and determining that a track segment consisting of interaction points on each second traveling track in the traveling track set is the intersection track segment corresponding to each second traveling track in the traveling track set.

5. An autonomous driving apparatus (10), comprising:

a first determining unit (401), configured to determine, based on a first traveling track currently planned by a first vehicle, a traveling track set corresponding to the first traveling track, wherein the traveling track set comprises one or more predicted second traveling tracks separately corresponding to N second vehicles, the N second vehicles are all vehicles in an area range corresponding to the first vehicle at a current intersection, a shortest distance between any second traveling track in the traveling track set and the first traveling track is within a first distance threshold, and N is a positive integer; a second determining unit (402), configured to determine an intersection track segment on each second traveling track in the traveling track set, wherein a shortest distance between any point on the intersection track segment and the first traveling track is within a second distance threshold;

an intersection unit (402), configured to separately determine, based on current speeds and current locations that correspond to the N second vehicles, intersection times at which the N second vehicles arrive at the intersection track segment; and

a speed unit (404), configured to determine a speed of the first vehicle based on the intersection track segment on each second traveling track in the traveling track set and the corresponding intersection time;

wherein the intersection time comprises an intersection start time; and the intersection unit (403) is specifically configured to:

> determine, based on the current speeds corresponding to the N second vehicles, intersection passing time in which each of the N second vehicles passes through the intersection track segment on the one or more corresponding predicted second traveling tracks; and
>
> determine, based on the current speeds corresponding to the N second vehicles, the current locations corresponding to the N second vehicles, and a location corresponding to the intersection track segment on each second traveling track in the traveling track set, an intersection start time at which each of the N second vehicles arrives at the intersection track segment on the one or more corresponding predicted second traveling tracks;
>
> **characterized in that** the speed unit (404) is specifically configured to:
>
>> determine a location relationship between the intersection track segment and the first vehicle based on the intersection track segment on each second traveling track in the traveling track set and the corresponding intersection time;
>>
>> determine, according to a preset right-of-way rule, a right-of-way relationship between the first traveling track and the second traveling track corresponding to the intersection track segment, wherein the right-of-way relationship is priorities of a vehicle running on the first traveling track and a vehicle running on the second traveling track when passing through the intersection track segment; and
>>
>> determine, based on the right-of-way relationship and the location relationship, that a traveling speed with a minimum cost function value in a plurality of traveling speeds is the speed of the first vehicle.

6. The apparatus (10) according to claim 5, wherein the second traveling track is a track on a plurality of virtual lanes in the area range, the plurality of virtual lanes are used by the second vehicles to travel in a target intersection, and the plurality of virtual lanes are extended lanes that are respectively corresponding to a plurality of lanes obtained based on map information in the area range.

7. The apparatus (10) according to claim 5 or 6, wherein the first determining unit (401) is specifically configured to:

> determine M traveling tracks, wherein the M traveling tracks comprise a predicted traveling track of each of the N second vehicles, and M is a positive integer less than or equal to N; and traverse the M traveling tracks, to determine the traveling track set from the M traveling tracks.

8. The apparatus (10) according to claim 7, wherein the second determining unit (402) is specifically configured to:

> separately determine first path points evenly distributed on the first traveling track at a preset interval and second path points evenly distributed on each second traveling track in the traveling track set at the preset interval,
>
> determine a plurality of interaction points from all the second path points, wherein a shortest distance between each of the plurality of interaction points and one of the first path points is within the second distance threshold; and
>
> determine that a track segment consisting of interaction points on each second traveling track in the traveling track set is the intersection track segment corresponding to each second traveling track in the traveling track set.

9. A computer storage medium, wherein the computer storage medium stores a computer program, and when the computer program is executed by a processor, the method according to any one of claims 1 to 4 is implemented.

10. A computer program, wherein the computer program comprises instructions, and when the computer program is executed by a computer, the computer is enabled to perform the method according to any one of claims 1 to 4.

**Patentansprüche**

1. Autonomes Fahrverfahren, umfassend:

   Bestimmen (S303) eines Bewegungsbahnsatzes, der der ersten Bewegungsbahn entspricht, basierend auf einer aktuell durch ein erstes Fahrzeug geplanten ersten Bewegungsbahn, wobei der Bewegungsbahnsatz eine oder mehrere vorhergesagte zweite Bewegungsbahnen umfasst, die separat N zweiten Fahrzeugen entsprechen, die N zweiten Fahrzeuge alle Fahrzeuge in einem Flächenbereich sind, der dem ersten Fahrzeug an einer aktuellen Kreuzung entspricht, eine kürzeste Distanz zwischen einer beliebigen zweiten Bewegungsbahn in dem Bewegungsbahnsatz und der ersten Bewegungsbahn innerhalb eines ersten Distanzschwellenwerts liegt und N eine positive Ganzzahl ist;
   Bestimmen (S304) eines Kreuzungsbahnsegments auf jeder zweiten Bewegungsbahn in dem Bewegungsbahnsatz, wobei eine kürzeste Distanz zwischen einem beliebigen Punkt auf dem Kreuzungsbahnsegment und der ersten Bewegungsbahn innerhalb eines zweiten Distanzschwellenwerts liegt;
   separates Bestimmen (S305) von Kreuzungszeiten, zu denen die N zweiten Fahrzeuge an dem Kreuzungsbahnsegment ankommen, basierend auf aktuellen Geschwindigkeiten und aktuellen Standorten, die den N zweiten Fahrzeugen entsprechen; und
   Bestimmen (S306) einer Geschwindigkeit des ersten Fahrzeugs basierend auf dem Kreuzungsbahnsegment auf jeder zweiten Bewegungsbahn in dem Bewegungsbahnsatz und der entsprechenden Kreuzungszeit;
   wobei die Kreuzungszeit eine Kreuzungsstartzeit umfasst, und das separate Bestimmen (305) von Kreuzungszeiten, zu denen die N zweiten Fahrzeuge an dem Kreuzungsbahnsegment ankommen, basierend auf aktuellen Geschwindigkeiten und aktuellen Standorten, die den N zweiten Fahrzeugen entsprechen, Folgendes umfasst:

   Bestimmen einer Kreuzungspassierzeit, in der jedes der N zweiten Fahrzeuge das Kreuzungsbahnsegment auf der einen oder den mehreren entsprechenden vorhergesagten zweiten Bewegungsbahnen passiert, basierend auf den aktuellen Geschwindigkeiten, die den N zweiten Fahrzeugen entsprechen; und
   Bestimmen einer Kreuzungsstartzeit, zu der jedes der N zweiten Fahrzeuge an dem Kreuzungsbahnsegment auf der einen oder den mehreren entsprechenden vorhergesagten zweiten Bewegungsbahnen ankommt, basierend auf den aktuellen Geschwindigkeiten, die den N zweiten Fahrzeugen entsprechen, den aktuellen Standorten, die den N zweiten Fahrzeugen entsprechen, und einem Standort, der dem Kreuzungsbahnsegment auf jeder zweiten Bewegungsbahn in dem Bewegungsbahnsatz entspricht;
   **dadurch gekennzeichnet, dass**
   das Bestimmen (306) einer Geschwindigkeit des ersten Fahrzeugs basierend auf dem Kreuzungsbahnsegment auf jeder zweiten Bewegungsbahn in dem Bewegungsbahnsatz und der entsprechenden Kreuzungszeit Folgendes umfasst:

   Bestimmen einer Standortbeziehung zwischen dem Kreuzungsbahnsegment und dem ersten Fahrzeug basierend auf dem Kreuzungsbahnsegment auf jeder zweiten Bewegungsbahn in dem Bewegungsbahnsatz und der entsprechenden Kreuzungszeit;
   Bestimmen einer Vorfahrtsbeziehung zwischen der ersten Bewegungsbahn und der zweiten Bewegungsbahn, die dem Kreuzungsbahnsegment entsprechen, gemäß einer voreingestellten Vorfahrtsregel, wobei die Vorfahrtsbeziehung die Vorfahrtsrechte eines Fahrzeugs, das auf der ersten Bewegungsbahn fährt, und eines Fahrzeugs, das auf der zweiten Bewegungsbahn fährt, beim Passieren des Kreuzungsbahnsegments darstellt; und
   Bestimmen, basierend auf der Vorfahrtsbeziehung und der Standortbeziehung, dass eine Fahrgeschwindigkeit mit einem minimalen Kostenfunktionswert in einer Vielzahl von Fahrgeschwindigkeiten die Geschwindigkeit des ersten Fahrzeugs ist.

2. Verfahren nach Anspruch 1, wobei die zweite Bewegungsbahn eine Bahn auf einer Vielzahl von virtuellen Fahrstreifen in dem Flächenbereich ist, die Vielzahl von virtuellen Fahrstreifen durch die zweiten Fahrzeuge zum Fahren in dem Flächenbereich verwendet wird und die Vielzahl von virtuellen Fahrstreifen erweiterte Fahrstreifen sind, die jeweils einer Vielzahl von Fahrstreifen entsprechen, die basierend auf Karteninformationen in dem Flächenbereich erlangt werden.

3. Verfahren nach Anspruch 1 oder 2, wobei das Bestimmen (303) eines Bewegungsbahnsatzes, der der ersten Bewegungsbahn entspricht, basierend auf einer aktuell durch ein erstes Fahrzeug geplanten ersten Bewegungsbahn Folgendes umfasst:

>Bestimmen von M Bewegungsbahnen, wobei die M Bewegungsbahnen eine vorhergesagte Bewegungsbahn jedes der N zweiten Fahrzeuge umfassen und M eine positive Ganzzahl kleiner oder gleich N ist; und
>Durchfahren der M Bewegungsbahnen, um den Bewegungsbahnsatz aus den M Bewegungsbahnen zu bestimmen.

4. Verfahren nach Anspruch 3, wobei das Bestimmen (304) eines Kreuzungsbahnsegments auf jeder zweiten Bewegungsbahn in dem Bewegungsbahnsatz Folgendes umfasst:

>separates Bestimmen erster Wegpunkte, die in einem voreingestellten Intervall gleichmäßig auf der ersten Bewegungsbahn verteilt sind, und zweiter Wegpunkte, die in dem voreingestellten Intervall gleichmäßig auf jeder zweiten Bewegungsbahn in dem Bewegungsbahnsatz verteilt sind;
>Bestimmen einer Vielzahl von Interaktionspunkten aus allen zweiten Wegpunkten, wobei eine kürzeste Distanz zwischen jedem der Vielzahl von Interaktionspunkten und einem der ersten Wegpunkte innerhalb des zweiten Distanzschwellenwerts liegt; und
>Bestimmen, dass ein Bahnsegment, das aus Interaktionspunkten auf jeder zweiten Bewegungsbahn in dem Bewegungsbahnsatz besteht, das Kreuzungsbahnsegment ist, das jeder zweiten Bewegungsbahn in dem Bewegungsbahnsatz entspricht.

5. Autonome Fahrvorrichtung (10), umfassend:

>eine erste Bestimmungseinheit (401), die zum Bestimmen eines Bewegungsbahnsatzes, der der ersten Bewegungsbahn entspricht, basierend auf einer aktuell durch ein erstes Fahrzeug geplanten ersten Bewegungsbahn konfiguriert ist, wobei der Bewegungsbahnsatz eine oder mehrere vorhergesagte zweite Bewegungsbahnen umfasst, die separat N zweiten Fahrzeugen entsprechen, die N zweiten Fahrzeuge alle Fahrzeuge in einem Flächenbereich sind, der dem ersten Fahrzeug an einer aktuellen Kreuzung entspricht, eine kürzeste Distanz zwischen einer beliebigen zweiten Bewegungsbahn in dem Bewegungsbahnsatz und der ersten Bewegungsbahn innerhalb eines ersten Distanzschwellenwerts liegt und N eine positive Ganzzahl ist;
>eine zweite Bestimmungseinheit (402), die zum Bestimmen eines Kreuzungsbahnsegments auf jeder zweiten Bewegungsbahn in dem Bewegungsbahnsatz konfiguriert ist, wobei eine kürzeste Distanz zwischen einem beliebigen Punkt auf dem Kreuzungsbahnsegment und der ersten Bewegungsbahn innerhalb eines zweiten Distanzschwellenwerts liegt;
eine Kreuzungseinheit (402), die zum separaten Bestimmen von Kreuzungszeiten, zu denen die N zweiten Fahrzeuge an dem Kreuzungsbahnsegment ankommen, basierend auf aktuellen Geschwindigkeiten und aktuellen Standorten, die den N zweiten Fahrzeugen entsprechen, konfiguriert ist; und
eine Geschwindigkeitseinheit (404), die zum Bestimmen einer Geschwindigkeit des ersten Fahrzeugs basierend auf dem Kreuzungsbahnsegment auf jeder zweiten Bewegungsbahn in dem Bewegungsbahnsatz und der entsprechenden Kreuzungszeit konfiguriert ist;
wobei die Kreuzungszeit eine Kreuzungsstartzeit umfasst; und die Kreuzungseinheit (403) speziell zu Folgendem konfiguriert ist:

>Bestimmen einer Kreuzungspassierzeit, in der jedes der N zweiten Fahrzeuge das Kreuzungsbahnsegment auf der einen oder den mehreren entsprechenden vorhergesagten zweiten Bewegungsbahnen passiert, basierend auf den aktuellen Geschwindigkeiten, die den N zweiten Fahrzeugen entsprechen; und
>Bestimmen einer Kreuzungsstartzeit, zu der jedes der N zweiten Fahrzeuge an dem Kreuzungsbahnsegment auf der einen oder den mehreren entsprechenden vorhergesagten zweiten Bewegungsbahnen ankommt, basierend auf den aktuellen Geschwindigkeiten, die den N zweiten Fahrzeugen entsprechen, den aktuellen Standorten, die den N zweiten Fahrzeugen entsprechen, und einem Standort, der dem Kreuzungsbahnsegment auf jeder zweiten Bewegungsbahn in dem Bewegungsbahnsatz entspricht;
>**dadurch gekennzeichnet, dass** die Geschwindigkeitseinheit (404) speziell zu Folgendem konfiguriert ist:

>>Bestimmen einer Standortbeziehung zwischen dem Kreuzungsbahnsegment und dem ersten Fahrzeug basierend auf dem Kreuzungsbahnsegment auf jeder zweiten Bewegungsbahn in dem Bewegungsbahnsatz und der entsprechenden Kreuzungszeit;
>>Bestimmen einer Vorfahrtsbeziehung zwischen der ersten Bewegungsbahn und der zweiten Bewegungsbahn, die dem Kreuzungsbahnsegment entsprechen, gemäß einer voreingestellten Vorfahrtsregel, wobei die Vorfahrtsbeziehung die Vorfahrtsrechte eines Fahrzeugs, das auf der ersten Bewegungsbahn fährt, und eines Fahrzeugs, das auf der zweiten Bewegungsbahn fährt, beim Passieren des Kreuzungsbahnsegments darstellt; und Bestimmen, basierend auf der Vorfahrtsbeziehung und der Standortbeziehung, dass eine Fahrgeschwindigkeit mit einem minimalen Kostenfunktionswert in einer Vielzahl von Fahrgeschwindigkeiten die Geschwindigkeit des ersten Fahrzeugs ist.

6. Vorrichtung (10) nach Anspruch 5, wobei die zweite Bewegungsbahn eine Bahn auf einer Vielzahl von virtuellen Fahrstreifen in dem Flächenbereich ist, die Vielzahl von virtuellen Fahrstreifen durch die zweiten Fahrzeuge zum Fahren in einer Zielkreuzung verwendet wird und die Vielzahl von virtuellen Fahrstreifen erweiterte Fahrstreifen sind, die jeweils einer Vielzahl von Fahrstreifen entsprechen, die basierend auf Karteninformationen in dem Flächenbereich erlangt werden.

7. Vorrichtung (10) nach Anspruch 5 oder 6, wobei die erste Bestimmungseinheit (401) speziell zu Folgendem konfiguriert ist:

   Bestimmen von M Bewegungsbahnen, wobei die M Bewegungsbahnen eine vorhergesagte Bewegungsbahn jedes der N zweiten Fahrzeuge umfassen und M eine positive Ganzzahl kleiner oder gleich N ist; und Durchfahren der M Bewegungsbahnen, um den Bewegungsbahnsatz aus den M Bewegungsbahnen zu bestimmen.

8. Vorrichtung (10) nach Anspruch 7, wobei die zweite Bestimmungseinheit (402) speziell zu Folgendem konfiguriert ist:

   separates Bestimmen erster Wegpunkte, die in einem voreingestellten Intervall gleichmäßig auf der ersten Bewegungsbahn verteilt sind, und zweiter Wegpunkte, die in dem voreingestellten Intervall gleichmäßig auf jeder zweiten Bewegungsbahn in dem Bewegungsbahnsatz verteilt sind; Bestimmen einer Vielzahl von Interaktionspunkten aus allen zweiten Wegpunkten, wobei eine kürzeste Distanz zwischen jedem der Vielzahl von Interaktionspunkten und einem der ersten Wegpunkte innerhalb des zweiten Distanzschwellenwerts liegt; und Bestimmen, dass ein Bahnsegment, das aus Interaktionspunkten auf jeder zweiten Bewegungsbahn in dem Bewegungsbahnsatz besteht, das Kreuzungsbahnsegment ist, das jeder zweiten Bewegungsbahn in dem Bewegungsbahnsatz entspricht.

9. Computerspeichermedium, wobei das Computerspeichermedium ein Computerprogramm speichert und, wenn das Computerprogramm durch einen Prozessor ausgeführt wird, das Verfahren nach einem der Ansprüche 1 bis 4 umgesetzt wird.

10. Computerprogramm, wobei das Computerprogramm Anweisungen umfasst und, wenn das Computerprogramm durch einen Computer ausgeführt wird, es dem Computer ermöglicht wird, das Verfahren nach einem der Ansprüche 1 bis 4 durchzuführen.

## Revendications

1. Procédé de conduite autonome, comprenant :

   la détermination (S303), sur la base d'une première piste de déplacement actuellement planifiée par un premier véhicule, d'un ensemble de pistes de déplacement correspondant à la première piste de déplacement, dans lequel l'ensemble de pistes de déplacement comprend une ou plusieurs secondes pistes de déplacement prédites correspondant séparément à N seconds véhicules, les N seconds véhicules sont tous des véhicules dans une plage de zone correspondant au premier véhicule à une intersection actuelle, une distance la plus courte entre une seconde piste de déplacement quelconque dans l'ensemble de pistes de déplacement et la première piste de déplacement est comprise dans un premier seuil de distance, et N est un entier positif ; la détermination (S304) d'un segment de piste d'intersection sur chaque seconde piste de déplacement dans l'ensemble de pistes de déplacement, dans lequel une distance la plus courte entre n'importe quel point sur le segment de piste d'intersection et la première piste de déplacement est comprise dans un second seuil de distance ; la détermination séparée (S305), sur la base de vitesses actuelles et d'emplacements actuels qui correspondent aux N seconds véhicules, des heures d'intersection auxquelles les N seconds véhicules arrivent au segment de piste d'intersection ; et la détermination (S306) d'une vitesse du premier véhicule sur la base du segment de piste d'intersection sur chaque seconde piste de déplacement dans l'ensemble de pistes de déplacement et de l'heure d'intersection correspondante ;

dans lequel l'heure d'intersection comprend une heure de début d'intersection, et la détermination séparée (305), sur la base de vitesses actuelles et d'emplacements actuels qui correspondent aux N seconds véhicules, des heures d'intersection auxquelles les N seconds véhicules arrivent au segment de piste d'intersection comprend :

la détermination, sur la base des vitesses actuelles correspondant aux N seconds véhicules, de l'heure de passage à l'intersection au cours de laquelle chacun des N seconds véhicules traverse le segment de piste d'intersection sur les une ou plusieurs secondes pistes de déplacement prédites correspondantes ; et

la détermination, sur la base des vitesses actuelles correspondant aux N seconds véhicules, des emplacements actuels correspondant aux N seconds véhicules et d'un emplacement correspondant au segment de piste d'intersection sur chaque seconde piste de déplacement dans l'ensemble de pistes de déplacement, d'une heure de début d'intersection à laquelle chacun des N seconds véhicules arrive au segment de piste d'intersection sur les une ou plusieurs secondes pistes de déplacement prédites correspondantes ;

**caractérisé en ce que**

la détermination (306) d'une vitesse du premier véhicule sur la base du segment de piste d'intersection sur chaque seconde piste de déplacement dans l'ensemble de pistes de déplacement et de l'heure d'intersection correspondante comprend :

la détermination d'une relation d'emplacement entre le segment de piste d'intersection et le premier véhicule sur la base du segment de piste d'intersection sur chaque seconde piste de déplacement dans l'ensemble de pistes de déplacement et de l'heure d'intersection correspondante ;

la détermination, selon une règle de priorité prédéfinie, d'une relation de priorité entre la première piste de déplacement et la seconde piste de déplacement correspondant au segment de piste d'intersection, dans lequel la relation de priorité représente des priorités d'un véhicule circulant sur la première piste de déplacement et d'un véhicule circulant sur la seconde piste de déplacement lors du passage à travers le segment de piste d'intersection ; et

la détermination, sur la base de la relation de priorité et de la relation d'emplacement, du fait qu'une vitesse de déplacement avec une valeur de fonction de coût minimale dans une pluralité de vitesses de déplacement est la vitesse du premier véhicule.

2. Procédé selon la revendication 1, dans lequel la seconde piste de déplacement est une piste sur une pluralité de voies virtuelles dans la plage de zone, la pluralité de voies virtuelles sont utilisées par les seconds véhicules pour se déplacer dans la plage de zone, et la pluralité de voies virtuelles sont des voies étendues qui correspondent respectivement à une pluralité de voies obtenues sur la base d'informations cartographiques dans la plage de zone.

3. Procédé selon la revendication 1 ou 2, dans lequel la détermination (303), sur la base d'une première piste de déplacement actuellement planifiée par un premier véhicule, d'un ensemble de pistes de déplacement correspondant à la première piste de déplacement comprend :

la détermination de M pistes de déplacement, dans lequel les M pistes de déplacement comprennent une piste de déplacement prédite de chacun des N seconds véhicules, et M est un entier positif inférieur ou égal à N ; et

le fait de parcourir les M pistes de déplacement, pour déterminer l'ensemble de pistes de déplacement à partir des M pistes de déplacement.

4. Procédé selon la revendication 3, dans lequel la détermination (304) d'un segment de piste d'intersection sur chaque seconde piste de déplacement dans l'ensemble de pistes de déplacement comprend :

la détermination séparée de premiers points de trajectoire uniformément répartis sur la première piste de déplacement à un intervalle prédéfini et de seconds points de trajectoire uniformément répartis sur chaque seconde piste de déplacement dans l'ensemble de pistes de déplacement à l'intervalle prédéfini ;

la détermination d'une pluralité de points d'interaction à partir de tous les seconds points de trajectoire, dans lequel la distance la plus courte entre chacun de la pluralité de points d'interaction et l'un des premiers points de trajectoire est comprise dans le second seuil de distance ; et la détermination du fait qu'un segment de piste constitué de points d'interaction sur chaque seconde piste de déplacement dans l'ensemble de pistes de déplacement est le segment de piste d'intersection correspondant à chaque seconde piste de déplacement dans l'ensemble de pistes de déplacement.

5.  Appareil de conduite autonome (10), comprenant :

une première unité de détermination (401) configurée pour déterminer, sur la base d'une première piste de déplacement actuellement planifiée par un premier véhicule, un ensemble de pistes de déplacement correspondant à la première piste de déplacement, dans lequel l'ensemble de pistes de déplacement comprend une ou plusieurs secondes pistes de déplacement prédites correspondant séparément à N seconds véhicules, les N seconds véhicules sont tous des véhicules dans une plage de zone correspondant au premier véhicule à une intersection actuelle, une distance la plus courte entre une seconde piste de déplacement quelconque dans l'ensemble de pistes de déplacement et la première piste de déplacement est comprise dans un premier seuil de distance, et N est un entier positif ;

une seconde unité de détermination (402) configurée pour déterminer un segment de piste d'intersection sur chaque seconde piste de déplacement dans l'ensemble de pistes de déplacement, dans lequel une distance la plus courte entre un point quelconque sur le segment de piste d'intersection et la première piste de déplacement est comprise dans un second seuil de distance ;

une unité d'intersection (402) configurée pour déterminer séparément, sur la base de vitesses actuelles et d'emplacements actuels qui correspondent aux N seconds véhicules, les heures d'intersection auxquelles les N seconds véhicules arrivent au segment de piste d'intersection ; et

une unité de vitesse (404) configurée pour déterminer une vitesse du premier véhicule sur la base du segment de piste d'intersection sur chaque seconde piste de déplacement dans l'ensemble de pistes de déplacement et de l'heure d'intersection correspondante ;

dans lequel l'heure d'intersection comprend une heure de début d'intersection ; et l'unité d'intersection (403) est spécifiquement configurée pour :

déterminer, sur la base des vitesses actuelles correspondant aux N seconds véhicules, l'heure de passage à l'intersection au cours de laquelle chacun des N seconds véhicules traverse le segment de piste d'intersection sur les une ou plusieurs secondes pistes de déplacement prédites correspondantes ; et

déterminer, sur la base des vitesses actuelles correspondant aux N seconds véhicules, des emplacements actuels correspondant aux N seconds véhicules et d'un emplacement correspondant au segment de piste d'intersection sur chaque seconde piste de déplacement dans l'ensemble de pistes de déplacement, une heure de début d'intersection à laquelle chacun des N seconds véhicules arrive au segment de piste d'intersection sur les une ou plusieurs secondes pistes de déplacement prédites correspondantes ;

**caractérisé en ce que** l'unité de vitesse (404) est spécifiquement configurée pour :

déterminer une relation d'emplacement entre le segment de piste d'intersection et le premier véhicule sur la base du segment de piste d'intersection sur chaque seconde piste de déplacement dans l'ensemble de pistes de déplacement et de l'heure d'intersection correspondante ;

déterminer, selon une règle de priorité prédéfinie, une relation de priorité entre la première piste de déplacement et la seconde piste de déplacement correspondant au segment de piste d'intersection, dans lequel la relation de priorité représente des priorités d'un véhicule circulant sur la première piste de déplacement et d'un véhicule circulant sur la seconde piste de déplacement lors du passage à travers le segment de piste d'intersection ; et

déterminer, sur la base de la relation de priorité et de la relation d'emplacement, qu'une vitesse de déplacement avec une valeur de fonction de coût minimale dans une pluralité de vitesses de déplacement est la vitesse du premier véhicule.

6.  Appareil (10) selon la revendication 5, dans lequel la seconde piste de déplacement est une piste sur une pluralité de voies virtuelles dans la plage de zone, la pluralité de voies virtuelles sont utilisées par les seconds véhicules pour se déplacer dans une intersection cible, et la pluralité de voies virtuelles sont des voies étendues qui correspondent respectivement à une pluralité de voies obtenues sur la base d'informations cartographiques dans la plage de zone.

7. Appareil (10) selon la revendication 5 ou 6, dans lequel la première unité de détermination (401) est configurée spécifiquement pour :

déterminer M pistes de déplacement, dans lequel les M pistes de déplacement comprennent une piste de déplacement prédite de chacun des N seconds véhicules, et M est un entier positif inférieur ou égal à N ; et
parcourir les M pistes de déplacement, pour déterminer l'ensemble de pistes de déplacement à partir des M pistes de déplacement.

8. Appareil (10) selon la revendication 7, dans lequel la seconde unité de détermination (402) est configurée spécifiquement pour :

déterminer séparément des premiers points de trajectoire uniformément répartis sur la première piste de déplacement à un intervalle prédéfini et des seconds points de trajectoire uniformément répartis sur chaque seconde piste de déplacement dans l'ensemble de pistes de déplacement à l'intervalle prédéfini ;
déterminer une pluralité de points d'interaction à partir de tous les seconds points de trajectoire, dans lequel la distance la plus courte entre chacun de la pluralité de points d'interaction et l'un des premiers points de trajectoire est comprise dans le second seuil de distance ; et
déterminer qu'un segment de piste constitué de points d'interaction sur chaque seconde piste de déplacement dans l'ensemble de pistes de déplacement est le segment de piste d'intersection correspondant à chaque seconde piste de déplacement dans l'ensemble de pistes de déplacement.

9. Support de stockage informatique, dans lequel le support de stockage informatique stocke un programme informatique, et lorsque le programme informatique est exécuté par un processeur, le procédé selon l'une quelconque des revendications 1 à 4 est mis en œuvre.

10. Programme informatique, dans lequel le programme informatique comprend des instructions, et lorsque le programme informatique est exécuté par un ordinateur, l'ordinateur est activé pour réaliser le procédé selon l'une quelconque des revendications 1 à 4.

FIG. 1A

FIG. 1B

Service
device 001

Network

Network

Network

Intelligent vehicle 002
(autonomous driving apparatus)

FIG. 2A

Service
device 001

Network

Wi-Fi and
mobile network

Intelligent vehicle 002
(autonomous driving
apparatus)

Intelligent vehicle 002
(autonomous driving
apparatus)

Intelligent vehicle 002
(autonomous driving
apparatus)

FIG. 2B

**Intelligent vehicle 002**

Travel system 202
- Engine 218
- Energy source 219
- Transmission apparatus 220
- Wheel 221

Sensor system 204
- Global positioning system 222
- Inertial measurement unit 224
- Radar 226
- Laser rangefinder 228
- Camera 230

Control system 206
- Steering system 232
- Accelerator 234
- Brake unit 236
- Computer vision system 240
- Route control system 242
- Obstacle avoidance system 244

Peripheral device 208
- Wireless communication system 246
- Vehicle-mounted computer 248
- Microphone 250
- Speaker 252

Computer system 212
- Processor 213
- Instruction 215
- Memory 214

Power supply 210

User interface 216

**FIG. 2C**

FIG. 2D

EP 4 086 875 B1

FIG. 2E

EP 4 086 875 B1

| Determine occupancy grid map information | S301 |

$\downarrow$

| Plan a first traveling track based on the occupancy grid map information | S302 |

$\downarrow$

| Determine, based on the first traveling track currently planned by a first vehicle, a traveling track set corresponding to the first traveling track | S303 |

$\downarrow$

| Determine an intersection track segment on each second traveling track in the traveling track set | S304 |

$\downarrow$

| Separately determine, based on current speeds and current locations that correspond to N second vehicles, intersection times at which the N second vehicles arrive at the intersection track segment | S305 |

$\downarrow$

| Determine a speed of the first vehicle based on the intersection track segment on each second traveling track in the traveling track set and the corresponding intersection time | S306 |

FIG. 3A

FIG. 3B

**(1)**

**(2)**

FIG. 3C

Vehicle 4

Vehicle 3

Vehicle 1

Vehicle 2

First
vehicle

FIG. 3D

Second
vehicle

Second
vehicle

Predicted second
traveling track

First
traveling
track

Predicted second
traveling track

First
vehicle

FIG. 3E

Second vehicle

Second vehicle

Second traveling track

First traveling track

Second traveling track

First vehicle

FIG. 3F

Virtual lane

Virtual lane

FIG. 3G

Virtual
lane line

Virtual lane

Predicted
second
traveling
track

FIG. 3H

Intersection
interval

First
vehicle

FIG. 3I

Second vehicle

Second path point

Second vehicle

First path point

First vehicle

FIG. 3J

FIG. 3K

FIG. 3L

FIG. 3M

FIG. 3N

FIG. 3O

FIG. 4

Autonomous driving apparatus

20

501

502

Processor

Memory

Application program code

503

Communication interface

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3006294 A1